(19) **Europäisches Patentamt European Patent Office Office européen des brevets**

(11) **EP 4 517 561 A1**

(12) **EUROPEAN PATENT APPLICATION**
published in accordance with Art. 153(4) EPC

(43) Date of publication:
05.03.2025 Bulletin 2025/10

(21) Application number: 23796260.0

(22) Date of filing: 21.04.2023

(51) International Patent Classification (IPC):
*G06F 18/10* (2023.01)        *G06F 11/07* (2006.01)
*G06N 3/044* (2023.01)        *G06N 3/045* (2023.01)

(52) Cooperative Patent Classification (CPC):
G06F 11/07; G06F 18/10; G06N 3/02; G06N 3/044;
G06N 3/045

(86) International application number:
PCT/JP2023/015862

(87) International publication number:
WO 2023/210518 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.04.2022 JP 2022074629

(71) Applicant: Nikkiso Co., Ltd.
Tokyo 150-6022 (JP)

(72) Inventors:
• KIMURA, Hiroki
  Yokohama-shi, Kanagawa 232-0061 (JP)
• KIM, Sung-Teh
  Tokyo 152-0022 (JP)

(74) Representative: **Vossius & Partner**
**Patentanwälte Rechtsanwälte mbB**
**Siebertstrasse 3**
**81675 München (DE)**

(54) **ABNORMALITY PREDICTION SYSTEM, METHOD, AND COMPUTER PROGRAM**

(57)    A system for abnormality prediction is provided, which is able to precisely predict occurrences of abnormal events by using a neural network even in the case where inconsistency between multiple data time series obtained by a plurality of measurement instruments occurs. The system for abnormality prediction includes: a data reconstruction system configured to reconstruct, from the plurality of data time series, multidimensional array data that includes, as array elements, a plurality of measurement parameters and a plurality of relative time values that are assigned to the measurement parameters, respectively; and an inference calculator configured to calculate predictive information on the abnormal event, by performing calculation based on a neural network structure which includes an input layer for receiving the multidimensional array data, an intermediate layer structure containing one or more recurrent neural networks, and an output layer.

FIG. 1

**Description**

TECHNICAL FIELD

The present disclosure relates to a technique for predicting occurrences of abnormal events by using a machine-learned model, and particularly to a technique for predicting occurrences of abnormal events by using a neural network model trained by machine learning, based on multiple data time series obtained by measurement instruments, respectively.

BACKGROUND ART

Recently, there has been provided techniques of analyzing input data including one or more parameters by using methods using machine learning, for performing prediction, classification, or optimization operation relating to the one or more parameters. For example, as the methods using machine learning, decision trees and support vector machines (SVMs) have been used; and, recently, neural network models which simulate network structures of nerve cells in brains have been used in many cases. The neural network model may also be referred to as an artificial neural network (ANN) or may simply be referred to as a neural network. Many of neural networks for use in machine learning are hierarchical neural networks that include a combination of processing layers. Commonly, the hierarchical neural network includes: an input layer which receives input data; one or more intermediate layers which process output data of the input layer; and an output layer which outputs a final processing result based on output data of the one or more intermediate layers.

For example, Patent Literature 1 (Japanese Patent Application Publication No. 2021-527906) discloses a technique capable of generating original signature matrices that represent a state of a system of multiple time series, and predicting an occurrence of an anomaly from the generated signature matrices by using a combination of convolutional neural networks and a convolutional long-short term memory network (LSTM network) (see Figs. 1-4 and paragraphs [0015]-[0047] in Patent Literature 1).

CITATION LIST

PATENT LITERATURE

Patent Literature 1: Japanese Patent Application Publication No. 2021-527906 (PCT international publication No. WO 2020/046806)

SUMMARY OF INVENTION

TECHNICAL PROBLEM

When an occurrence of an abnormal event is predicted using a neural network, it appears that a higher prediction accuracy can be expected for the case where an occurrence of the abnormal event is predicted based on multiple data time series obtained by multiple measurement instruments involved in a system, than for the case where an occurrence of the abnormal event is predicted based on a single data time series obtained by a single measurement instrument involved in the system.

However, when inconsistency in terms of measurement times and/or inconsistency in terms of dimensions occurs between the multiple data time series, even in the case where input data to be used by an NN model is generated by synthesizing the multiple data time series in preprocessing, its prediction accuracy may not be improved if inconsistency occurs in the generated input data.

An example of inconsistency in terms of measurement times is the case where while a measurement interval in a first measurement instrument is several seconds (i.e. the first measurement instrument provides a measured quantity per several seconds), a measurement interval in a second measurement instrument is several minutes (i.e. the second measurement instrument provides a measured quantity per several minutes). Another example of inconsistency in terms of measurement times is the case where while a first measurement instrument provides measured quantities at regular time intervals, a second measurement instrument provides measured quantities at irregular time intervals. On the other hand, an example of inconsistency in terms of dimensions is the case where while a first measurement instrument provides a data time series having two-dimensional measured quantities [x(t), y(t)], a second measurement instrument provides a data time series having one-dimensional measured quantities z(t), where each of x(t), y(t), and z(t) is a measured value (i.e., a scalar quantity), and t is a variable representing a discrete measurement time.

In view of the foregoing, an object of the present disclosure is to provide a system, method, and computer program for abnormality prediction, which are able to precisely predict occurrences of abnormal events by using a neural network even in the case where inconsistency between data time series obtained by a plurality of measurement instruments occurs.

SOLUTION TO PROBLEM

In accordance with a first aspect of the present disclosure, there is provided a system for abnormality prediction for predicting at least one abnormal event from a plurality of data time series obtained from a plurality of measurement instruments, which comprises: a data reconstruction system configured to reconstruct, from the plurality of data time series, multidimensional array data that comprises, as array elements, a plurality of measurement parameters and a plurality of relative time values that are assigned to the measurement parameters, respectively; and an inference calculator configured to calculate predictive information on the abnormal event, by performing calculation based on a neural network structure which comprises an input layer for receiving the multidimensional array data, an intermediate layer structure comprising one or more recurrent neural networks, and an output layer.

In accordance with a second aspect of the present disclosure, there is provided a method for predicting, from a plurality of data time series obtained by a plurality of measurement instruments, occurrence of at least one abnormal event, and the method comprises the steps of: reconstructing, from the plurality of data time series, multidimensional array data that comprises, as array elements, a plurality of measurement parameters and a plurality of relative time values that are assigned to the plurality of measurement parameters, respectively; and calculating predictive information on the abnormal event, by performing calculation based on a neural network structure which comprises an input layer for receiving the multidimensional array data, an intermediate layer structure comprising one or more recurrent neural networks, and an output layer.

In accordance with a third aspect of the present disclosure, there is provided a computer program to be read from a nonvolatile memory and executed by one or more processors, wherein the computer program is configured to cause the one or more processors to perform the method according to the second aspect.

ADVANTAGEOUS EFFECTS OF INVENTION

According to the first to third aspects of the present disclosure, from the plurality of data time series, multidimensional array data is reconstructed which comprises, as array elements, a plurality of measurement parameters and a plurality of relative time values that are assigned to the measurement parameters, respectively, and calculations are performed based on the neural network structure using the multidimensional array data as an input. This allows, even if inconsistency in terms of measurement times or inconsistency in terms of dimensions between multiple data time series has occurred, for generation of multidimensional array data having a structure capable of compensating for the inconsistency in the neural network structure, or for generation of multidimensional array data having no inconsistency. In this regard, the structure capable of compensating for the inconsistency in the neural network structure means a reconstructed structure that allows for normal processing of multidimensional array data even if the neural network structure receives the multidimensional array data with inconsistency. Such multidimensional array data contains not only measurement parameters, but also, as time information, relative time values that are assigned to (in other words, stamped on) the measurement parameters, and, accordingly, calculations based on the neural network structure can be performed using, as an input, a measurement parameter set with which the time information is associated accurately. This allows for calculation of predictive information with high accuracy.

BRIEF DESCRIPTION OF DRAWINGS

Fig. 1 is a block diagram schematically showing a configuration of a system for abnormality prediction, which is an embodiment according to the present disclosure.
Fig. 2 is a view illustrating an example of a state wherein inconsistency in terms of measurement times occurs between multiple data time series.
Fig. 3 is a view illustrating an example of a state wherein inconsistency in terms of dimensions occurs between multiple data time series.
Fig. 4 is a block diagram schematically showing a neural network structure.
Fig. 5 is a schematic configuration diagram of an information processing apparatus for implementation of an abnormality prediction device according to an embodiment.
Fig. 6 is a flowchart schematically showing an example of a processing procedure for predicting occurrences of abnormal events.
Fig. 7 is a view illustrating multidimensional array data having a structure that allows for compensation for the inconsistency in a neural network structure.

Fig. 8 is a view illustrating multidimensional array data having a structure that allows for compensation for the inconsistency in a neural network structure.

Fig. 9 is a view illustrating an exemplary neural network structure.

Fig. 10 is a view illustrating a n exemplary neural network structure.

Fig. 11 is a view illustrating a n exemplary neural network structure.

Fig. 12 is a view illustrating, in a table form, relationship between seven kinds of measurement parameters and two-dimensional input vector series that used actually in a practical example.

Fig. 13 is a graph showing a result of the practical example.

Fig. 14 is a view illustrating, in a table form, a result of the practical example.

Fig. 15 is a view illustrating an exemplary neural network structure.

Fig. 16 is a view illustrating an example of a feed-forward neural network in a neural network structure.

Figs. 17A and 17B are views illustrating exemplary multidimensional array data that has neither inconsistency in terms of measurement times nor inconsistency in terms of dimensions.

Fig. 18 is a view illustrating an exemplary neural network structure.

Fig. 19 is an illustration for explaining a method of convolutions and nonlinear transformations.

Fig. 20 is a view illustrating an exemplary neural network structure.

Fig. 21 is a view illustrating an exemplary neural network structure.

Fig. 22 is a view illustrating an exemplary neural network structure.

Fig. 23 is a view illustrating an exemplary neural network structure.

Fig. 24 is a view illustrating an exemplary neural network structure.

Fig. 25 is a block diagram schematically showing a configuration of a system for abnormality prediction which is an embodiment according to the present disclosure.

Fig. 26 is a flowchart schematically illustrating an example of a processing procedure in loop control.

Fig. 27 is a block diagram schematically showing a configuration of a system for abnormality prediction which is an embodiment according to the present disclosure.

Fig. 28 is a flowchart schematically showing an example of a processing procedure for predicting occurrences of abnormal events.

Fig. 29 is a block diagram schematically showing a configuration of a system for abnormality prediction which is an embodiment according to the present disclosure.

Fig. 30 is a flowchart schematically illustrating an example of a processing procedure in loop control.

DESCRIPTION OF EMBODIMENTS

In the following description, various kinds of embodiments according to the present disclosure will be explained in detail with reference to the figures. In this regard, components to which the same reference symbol is assigned in the figures are considered to have the same configuration and the same function.

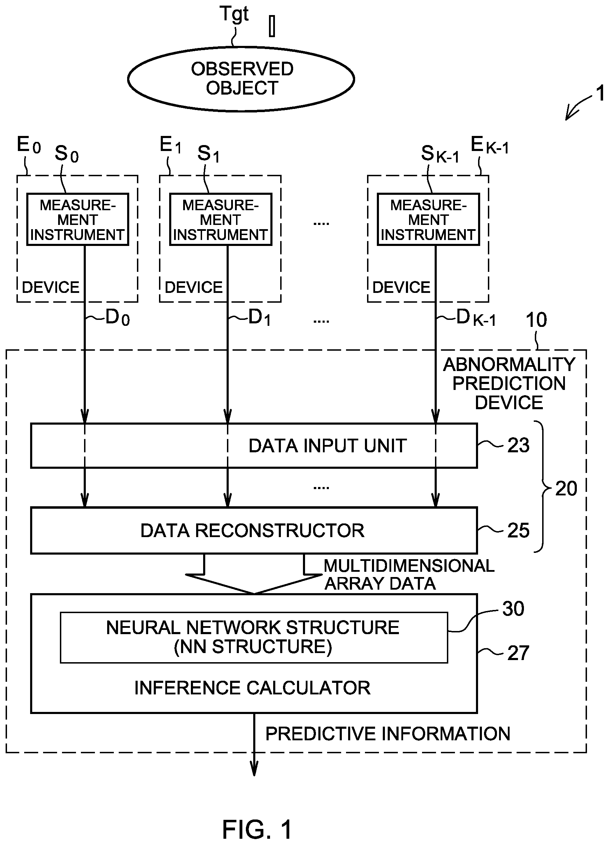

Fig. 1 is a block diagram schematically showing a configuration of a system 1 for abnormality prediction, which is an embodiment according to the present disclosure. As shown in Fig. 1, the system 1 for abnormality prediction comprises: a plurality of devices $E_0$, ..., $E_{K-1}$, wherein each of the devices is to perform observation of an observed object Tgt or processing; and an abnormality prediction device 10 which is configured to predict an occurrence of at least one abnormal event, based on multiple data time series $D_0$, ..., $D_{K-1}$ supplied from the devices $E_0$, ..., $E_{K-1}$, respectively. In the present case, K is a positive integer representing the number of the devices $E_0$, ..., $E_{K-1}$, and is 3 or greater than 3. In this regard, the number of the devices $E_0$, ..., $E_{K-1}$ is not limited to 3 or greater than 3, and the configuration of the system 1 for abnormality prediction may be modified appropriately to include two devices.

The devices $E_0$, ..., $E_{K-1}$ comprise measurement instruments $S_0$, ..., $S_{K-1}$, respectively. Each measurement instrument $S_k$ is a monitoring device which is configured to physically (for example, optically, electrically, or acoustically) measure the state of a device $E_k$ which includes the measurement instrument $S_k$ or the state of the observed object Tgt, and output a data time series $D_K$ that comprises a time series of measured quantities $D_k(t)$ obtained as a result of measurement. In this regard, the index k is an arbitrarily selected integer in a range from 0 to K-1, and the English letter t is a variable representing discrete measurement time. The measured quantity $D_k(t)$ may be supplied as a scalar quantity or a vector quantity. For example, the data time series $D_k$ is expressed as shown below.

$$D_k = [D_k(t_0), D_k(t_1), D_k(t_2), ...]$$

In the above expression, each of $t_0, t_1, t_2, ...,$ is measurement time that comprises the date and time, or the time only. Regarding information of the measurement time, the measurement time t measured by the measurement instrument $S_n$ may be transferred together with the measured quantity $D_k(t)$ to the abnormality prediction device 10, or the measurement time t may be assigned to each transferred measured quantity $D_k(t)$ by using a timer (which is not shown in the figure) in the abnormality prediction device 10.

An example of the observed object Tgt which can be shown is a living body of a human, a living body of an animal/plant, or an unfinished/finished product on a manufacturing line. The devices $E_0$, ..., $E_{K-1}$ may be medical devices, manufacturing devices, or monitoring devices, for example. It may be sufficient if measurement instruments $S_0$, ..., $S_{K-1}$ comprise, for example, functions for monitoring the states of the devices $E_0$, ..., $E_{K-1}$ or functions for monitoring the state of the observed object Tgt. In the case where the device $E_k$ is configured as a medical device such as a hemodialysis machine, a radiation therapy machine, a cardiopulmonary bypass machine (for example, ECMO: Extracorporeal Membrane Oxygenation), an electronic blood pressure monitor, or the like, the measurement instrument $S_k$ in the device $E_k$ may generate the measurement quantity $D_k(t)$ that shows the state of operation of the device $E_k$, such as the quantity of change in the current or the voltage in the inside of the device $E_k$, a blood circuit pressure, a dialysate circuit pressure, or the like, or may generate the measurement quantity $D_k(t)$ that shows the physiological condition (vital signs or the like) of the observed object Tgt, such as a pulse rate, blood oxygen saturation, a blood pressure, or the like. As the measurement quantity $D_k(t)$ indicating the physiological condition, a multidimensional vector quantity may be used which is composed by measured values of an amino acid profile (for example, forty-one amino acids and concentrations of metabolic-related substances) of blood of a human who is the observed object Tgt. For example, from measured values relating to forty-one kinds of materials in an amino acid profile of blood, a forty-one-dimensional vector quantity may be constructed as the measurement quantity $D_k(t)$.

In this regard, as shown in Fig. 1, the measurement instruments $S_0$, $S_1$, ..., $S_{K-1}$ are incorporated into the devices $E_0$, $E_1$, ..., $E_{K-1}$, respectively. In the example in Fig. 1, one device $E_k$ comprises one measurement instrument $S_k$, no limitation thereto intended. The configuration of the control system 1 may appropriately be modified such that a single device $E_k$ comprises a plurality of measurement instruments.

The abnormality prediction device 10 is connected to the devices $E_0$, ..., $E_{K-1}$, via a wired transmission path such as a transmission cable or the like or a wireless transmission path. The devices $E_0$, ..., $E_{K-1}$ have functions for transmitting data time series $D_0$, ..., $D_{K-1}$ that have been obtained from the measurement instruments $S_0$, ..., $S_{K-1}$, respectively, to the abnormality prediction device 10 via the wired transmission path or the wireless transmission path; and the abnormality prediction device 10 has a function to receive the data time series $D_0$, ..., $D_{K-1}$ from the devices $E_0$, ..., $E_{K-1}$.

As shown in Fig. 1, the abnormality prediction device 10 comprises: a data reconstruction system 20 which is configured to reconstruct multidimensional array data by using the data time series $D_0$, ..., $D_{K-1}$ supplied from the devices $E_0$, ..., $E_{K-1}$, respectively; and an inference calculator 27 which is configured to calculate predictive information on an abnormal event, by performing calculations based on a neural network structure (hereinafter, a "NN structure") 30 which uses the multidimensional array data as an input thereto. The data reconstruction system 20 comprises: a data input unit 23 which receives the data time series $D_0$, ..., $D_{K-1}$ and temporarily stores them; and a data reconstructor 25 which is configured to generate multidimensional array data by using the data time series $D_0$, ..., $D_{K-1}$ inputted via the data input unit 23. The inference calculator 27 is able to output calculated predictive information to an external device (which is not shown in the figure).

Even if inconsistency in terms of measurement times and/or in terms of dimensions has occurred between the data time series $D_0$, ..., $D_{K-1}$, the data reconstructor 25 is able to generate multidimensional array data that has a structure capable of compensating for the inconsistency in the NN structure 30 in the inference calculator 27, or generate multidimensional array data that has no inconsistency. In this regard, the structure capable of compensating for the inconsistency in the NN structure 30 means a structure reconstructed from the data time series $D_0$, ..., $D_{K-1}$ in a manner that allows, even if the NN structure 30 has received multidimensional array data including inconsistency, for normal processing of the multidimensional array data.

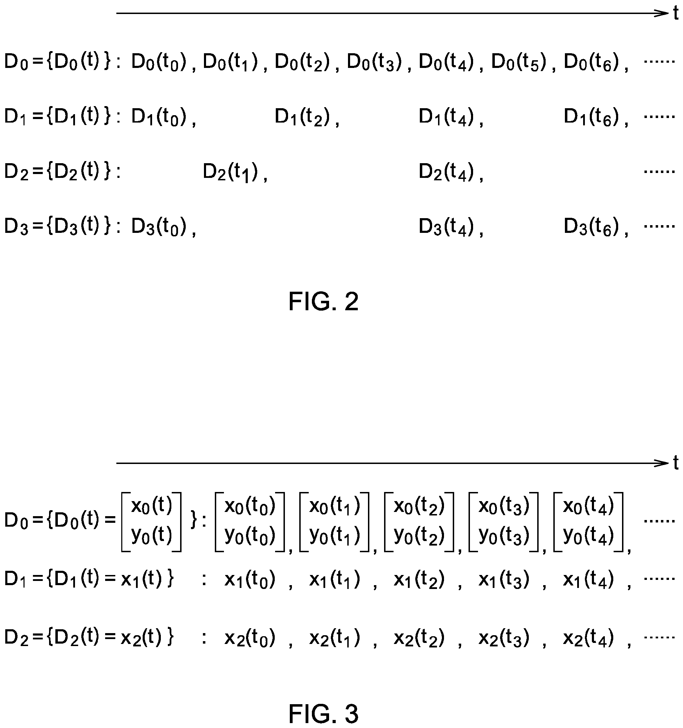

Fig. 2 a view illustrating an example of a state wherein inconsistency in terms of measurement times occurs between data time series $D_0$, $D_1$, $D_2$, and $D_3$. In the example in Fig. 2, the data time series $D_0$ comprises a series comprising measured quantities $D_0(t_0)$, $D_0(t_1)$, $D_0(t_2)$, $D_0(t_3)$, $D_0(t_4)$, $D_0(t_5)$, $D_0(t_6)$, ..., that are arranged at regular time intervals. The data time series $D_1$ comprises a series comprising measured quantities $D_1(t_0)$, $D_1(t_2)$, $D_1(t_4)$, $D_1(t_6)$, ..., that are arranged at regular time intervals, wherein the measurement interval of the data time series $D_1$ is longer than the measurement interval of the data time series $D_0$. The data time series $D_2$ comprises a series comprising measured quantities $D_2(t_0)$, $D_2(t_1)$, $D_2(t_2)$, $D_2(t_3)$, $D_2(t_4)$, $D_2(t_5)$, $D_2(t_6)$, ..., that are arranged at regular time intervals, wherein the measurement interval of the data time series $D_2$ is longer than the measurement interval of the data time series $D_1$. The data time series $D_3$ comprises a series comprising measured quantities $D_3(t_0)$, $D_3(t_4)$, $D_3(t_6)$, ..., that are arranged at irregular time intervals. As shown in Fig. 2, for example, it can be understood that the quantity $D_2(t_0)$ corresponding to the measured quantity $D_0(t_0)$ does not exists when the data time series $D_0$ and $D_2$ are compared with each other, and the quantity $D_3(t_1)$ corresponding to the measured quantity $D_2(t_1)$ does not exists when the data time series $D_2$ and $D_3$ are compared with each other. If input data that is to be used in the NN structure 30 is generated by synthesizing data time series $D_0$-$D_3$ such as those explained above as they stand, the input data will include inconsistency in terms of measurement times, and, accordingly, desired prediction accuracy may not be attained.

Fig. 3 is a view illustrating an example of a state wherein inconsistency in terms of dimensions occurs between data time series $D_0$, $D_1$, and $D_2$. In the example in Fig. 3, the data time series $D_0$ is a time series which comprises two-dimensional vector quantity $D_0(t)$ comprising measurement parameters $x_0(t)$ and $y_0(t)$, the data time series $D_1$ is a time series which comprises one-dimensional vector quantity (i.e., a scalar quantity) $D_1(t)$ comprising a measurement parameter $x_1(t)$, and the data time series $D_2$ is a time series which comprises one-dimensional vector quantity (i.e., a scalar quantity) $D_2(t)$ comprising a measurement parameter $x_2(t)$. It can be understood that inconsistency in terms of dimensions occurs between the data time series $D_0$ and $D_1$, and inconsistency in terms of dimensions occurs between the data time series $D_0$ and $D_2$. If input data that is to be used in the NN structure 30 is generated by simply synthesizing such data time series $D_0$-$D_2$, the input data may include inconsistency in terms of dimensions that does not conform to the NN structure 30. In such a case, even if calculations based on the NN structure 30 is performed, desired prediction accuracy may not be attained.

The data reconstructor 25 reconstructs, from the data time series $D_0$, ..., $D_{K-1}$, multidimensional array data that comprises multiple measurement parameters, and relative time values $\tau$ that are assigned to the measurement parameters, respectively, as array elements. In this regard, the relative time value $\tau$ represented by a Greek letter is a value that is set based on a common time reference, and is a variable representing discrete time. The measurement parameter is a measured value of a scalar quantity.

Each of the measurement parameters, that are array elements of the multidimensional array data, is a measured value of a scalar quantity selected from the data time series $D_0$, ..., $D_{K-1}$ (for example, the measurement parameter $x_0(t)$, $y_0(t)$, $x_1(t)$, or $x_2(t)$ in Fig. 3), or a value of a scalar quantity added by performing interpolation or zero padding. Zero padding means operation for adding a zero-value(s). A relative time value $\tau$ is assigned to each of such measurement parameters. It is required that the multidimensional array data be received by the NN structure 30 in the inference calculator 27, and, accordingly, the multidimensional array data is constructed to avoid inclusion of a lacked array element(s) therein. The data reconstructor 25 may reconstruct multidimensional array data that do not include a lacked array element(s) by choosing measured values from the data time series $D_0$, ..., $D_{K-1}$ and assigning the relative time values $\tau$, or may reconstruct multidimensional array data that do not include a lacked array element(s) by adopting a combination of choosing measured values from the data time series $D_0$, ..., $D_{K-1}$, performing interpolation or zero padding, and assigning the relative time values $\tau$. A tangible example of the multidimensional array data will be explained later.

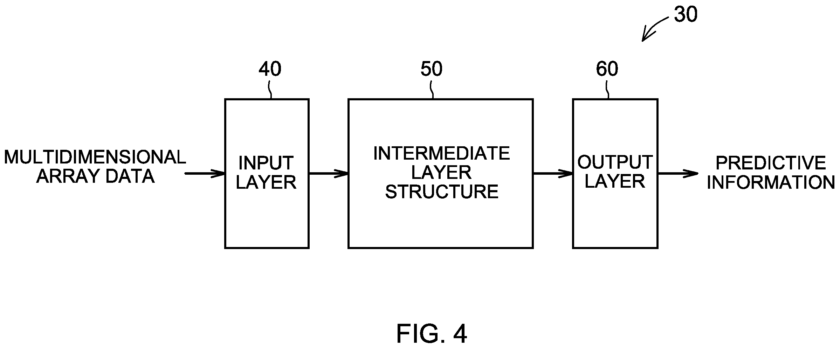

Referring to Fig. 1, the inference calculator 27 is able to calculate predictive information on an abnormal event, by performing calculations based on the NN structure 31 using multidimensional array data inputted from the data reconstructor 25. Fig. 4 is a block diagram schematically showing the NN structure 30. As shown in Fig. 4, the NN structure 30 comprises an input layer 40 which receives multidimensional array data, an intermediate layer structure 50 which comprises one or more recurrent neural networks (RNNs) for processing the multidimensional array data inputted via the input layer 40, and an output layer 60 which is configured to output predictive information based on outputs of the intermediate layer structure 50. The NN structure 30 is a structure which can be trained by supervised learning or unsupervised learning in accordance with a commonly-known machine learning algorithm such as a stochastic gradient descent (SGD) method or the like. The inference calculator 27 is able to calculate predictive information by using the learned NN structure 30. The predictive information is represents a combination of a risk factor that indicates the degree of at least one abnormal event and a prediction time at which the abnormal event is likely to occur. Details of the NN structure 30 will be explained later.

All or part of the above-explained components of the abnormality prediction device 10 may be implemented by using a single computer comprising one or more processors, or a plurality of computers which are connected with one another via a communication path. All or part of the components of the abnormality prediction device 10 may be implemented by using one or more processors that include one or more processing units, each processing unit performing a process in accordance with codes (a group of instructions) of a software and/or firmware read out of a nonvolatile memory (a computer-readable storage medium). For example, a CPU (Central Processing Unit), a GPU (Graphics Processing Unit), or a NPU (Neural network Processing Unit) may be used as the processing unit. Each of a GPU and NPU is a processing unit which is designed to have a structure adopted for arithmetic operations (for example, tensor operations) based on an artificial neural network (ANN). As the NPU, a TPU (Tensor Processing Unit) developed by Google, VPU (Vision Processing Unit) developed by Intel, or IPU (Intelligent Processing Unit) developed by Graphcore may be used. Alternatively, all or part of the components of the abnormality prediction device 10 may be implemented by using one or more processors that include a semiconductor integrated circuit such as an FPGA (Field-Programmable Gate Array) or the like. Alternatively, all or part of the components of the abnormality prediction device 10 may be implemented by using one or more processors that include a combination of the semiconductor integrated circuit such as a FPGA or the like and the processing unit such as a CPU, a GPU, or the like.

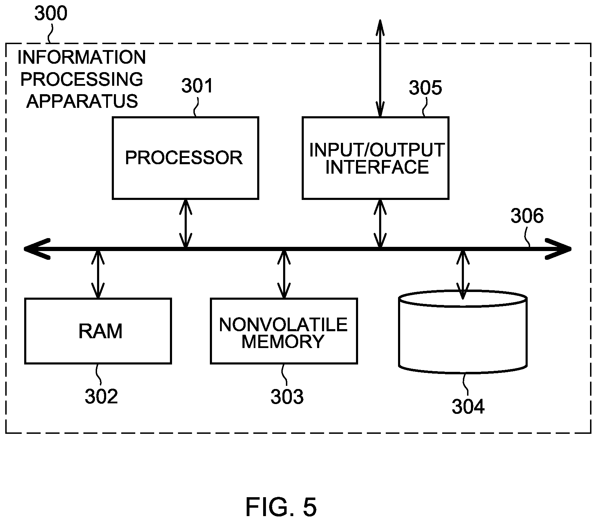

Fig. 5 is a schematic configuration diagram of an information processing apparatus (a computer) 300 which is an exemplary hardware configuration for implementation of the abnormality prediction device 10. The information processing apparatus 300 is configured to include a processor 301, a random access memory (RAM) 302, a nonvolatile memory 303, a high-capacity storage 304, an input/output interface 305, and a signal path 306. The signal path 306 is a bus for connecting the processor 301, the RAM 302, the nonvolatile memory 303, the high-capacity storage 304, and the input/output interface 305 with one another. The RAM 302 is a data storage area that is used when the processor 301 performs digital signal processing. In the case where the processor 301 includes therein a processing unit such as a CPU, a GPU, or the like, the nonvolatile memory 303 has a data storage area where codes of a software to be executed by the processor 301 are stored. For example, the data input unit 23 in Fig. 1 may be implemented by the input/output interface 305; and the data reconstructor 25 and the inference calculator 27 in Fig. 1 may be implemented by the processor 301, the RAM 302, and the nonvolatile memory 303. The high-capacity storage 304 is able to store predictive information calculated by the processor 301.

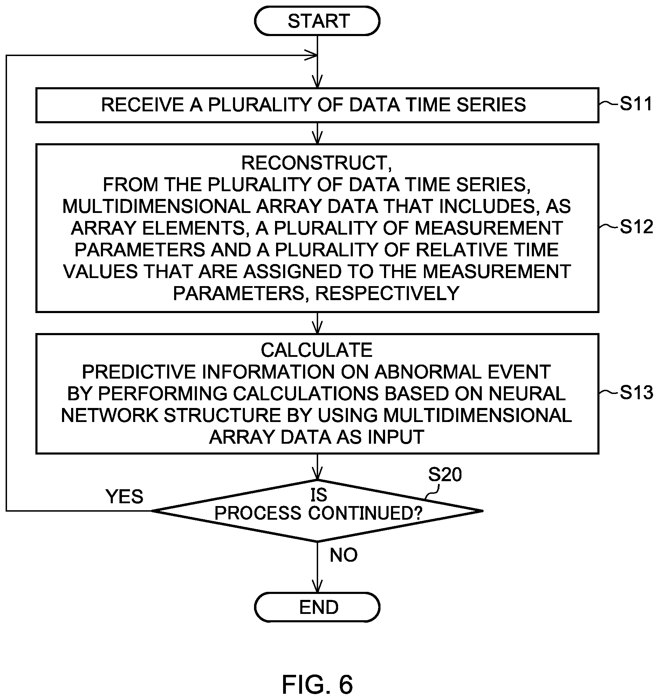

Next, in the following description, a processing procedure performed by the above-explained abnormality prediction device 10 will be explained with reference to Fig. 6. Fig. 6 is a flowchart schematically illustrating an example of a processing procedure for predicting occurrences of abnormal events.

Referring to Fig. 6, the data reconstructor 25 reads data time series $D_0$, ..., $D_{K-1}$ out of a data set temporarily stored in the data input unit 23 (step S11), and reconstructs, from the data time series $D_0$, ..., $D_{K-1}$, the multidimensional array data that comprises, as array elements, multiple measurement parameters and multiple relative time values $\tau$ that are assigned to the measurement parameters, respectively (step S12).

Next, the inference calculator 27 calculates predictive information on an abnormal event, by performing calculations based on the neural network structure 30 by using the multidimensional array data as an input (step S13).

Thereafter, if it is judged by the inference calculator 27 that process is to be continued (YES in step S20), the process returns to step S11. At that time, the data reconstructor 25 reads new data time series $D_0$, ..., $D_{K-1}$ out of the data set temporarily stored in the data input unit 23 (step S11), and, by using the new data time series $D_0$, ..., $D_{K-1}$, reconstructs multidimensional array data (step S12). Next, the inference calculator 27 calculates predictive information on an abnormal event, by performing calculations based on the neural network structure 30 using the multidimensional array data as an input (step S13). In the manner explained above, the abnormality prediction device 10 is able to predict, sequentially and in real time, occurrence of an abnormal event. Finally, the inference calculator 27 terminates the process if it has determined that the process is not to be continued (NO in step S20).

In the following description, various kinds of examples of multidimensional array data generated in the data reconstructor 25 will be explained, and various kinds of examples of NN structures 30 which are configured to be able to receive and process multidimensional array data will also be explained.

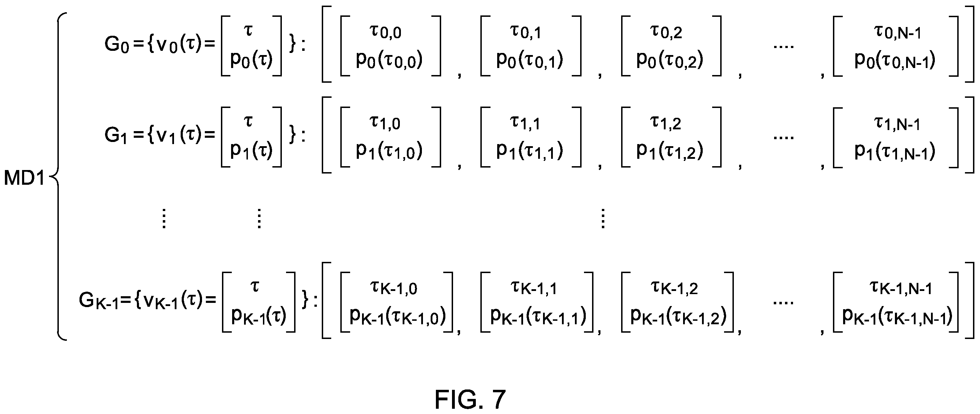

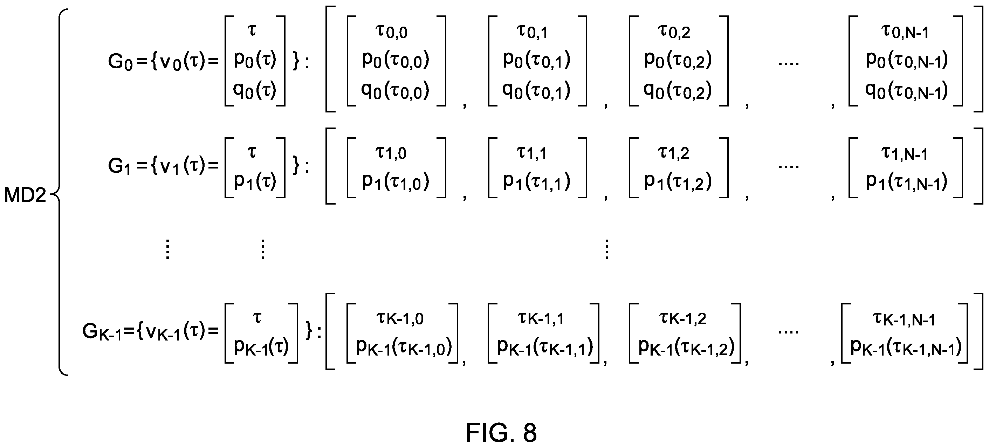

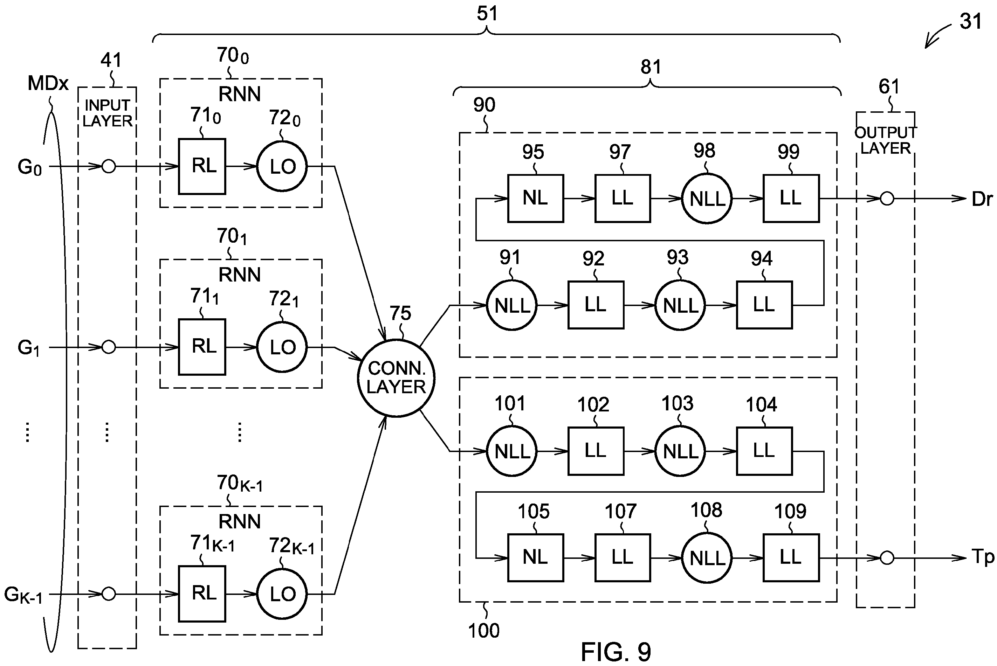

As explained above, the data reconstructor 25 is able to reconstruct, from the data time series $D_0$, ..., $D_{K-1}$, multidimensional array data that comprises, as array elements, a plurality of measurement parameters and a plurality of relative time values $\tau$ that are assigned to the measurement parameters, respectively. Even if inconsistency in terms of dimensions and/or in terms of measurement times occurs between data time series $D_0$, ..., $D_{K-1}$, the data reconstructor 25 is able to reconstruct the multidimensional array data that has a structure capable of compensating the inconsistency in the NN structure 30 in the inference calculator 27. Fig. 7 and Fig. 8 illustrate multidimensional array data MD1 and multidimensional array data MD2, respectively, each of which has a structure capable of compensating for the inconsistency in a neural network structure. Each of Figs. 9-11 is a view illustrating an NN structure configured to be able to compensate, even if each of the multidimensional array data MD1 and the multidimensional array data MD2 contains inconsistency, for the inconsistency while processing each of the multidimensional array data MD1 and the multidimensional array data MD2.

The multidimensional array data MD1 shown in Fig. 7 comprises multiple vector series $G_0$, $G_1$, ..., $G_{K-1}$. The k-th vector series $G_k$ is a series comprising multiple two-dimensional vectors $v_k(\tau)$ ($\tau = \tau_{k,0}, \tau_{k,1}, \tau_{k,2}, ..., \tau_{k,N-1}$), each comprising, as array elements, a measurement parameter $p_k(\tau)$ and a relative time value $\tau$ assigned thereto. In this regard, the index k is an arbitrarily selected integer in a range from 0 to K-1, and N is a positive integer showing a variable series length (i.e., the number of two-dimensional vectors). Each vector series $G_k$ has a dimension for specifying measurement parameters $p_k(\tau_{k,0}), p_k(\tau_{k,1}), p_k(\tau_{k,2}), ..., p_k(\tau_{k,N-1})$, and a dimension for specifying relative time values $\tau_{k,0}, \tau_{k,1}, \tau_{k,2}, ..., \tau_{k,N-1}$. For example in the case where each of data time series $D_0$, ..., $D_{K-1}$ supplied from the data input unit 23 comprises a time series of scalar quantities, the data reconstructor 25 is able to reconstruct two-dimensional vector series $G_0$, $G_1$, ..., $G_{K-1}$ by using the data time series $D_0$, ..., $D_{K-1}$, respectively.

On the other hand, the multidimensional array data MD2 shown in Fig. 8 comprises multiple vector series $G_0$, $G_1$, ..., $G_{K-1}$. The 0th vector series $G_0$ is a series comprising multiple three-dimensional vectors $v_0(\tau)$ ($\tau = \tau_{0,0}, \tau_{0,1}, \tau_{0,2}, ..., \tau_{0,N-1}$), each comprising, as array elements, measurement parameters $p_0(\tau)$ and $q_0(\tau)$ and a relative time value $\tau$ assigned thereto. The vector series $G_0$ has a dimension for specifying measurement parameters $p_0(\tau_{0,0}), p_0(\tau_{0,1}), p_0(\tau_{0,2}), ..., p_0(\tau_{0,N-1})$, a dimension for specifying measurement parameters $q_0(\tau_{0,0}), q_0(\tau_{0,1}), q_0(\tau_{0,2}), ..., q_0(\tau_{0,N-1})$, and a dimension for specifying relative time values $\tau_{0,0}, \tau_{0,1}, \tau_{0,2}, ..., \tau_{0,N-1}$. The k-th, that is not 0th, vector series $G_k$ is a series comprising multiple two-dimensional vectors $v_k(\tau)$ ($\tau=\tau_{k,0}, \tau_{k,1}, \tau_{k,2}, ..., \tau_{k,N-1}$), each comprising, as array elements, a measurement parameter $p_k(\tau)$ and a relative time value $\tau$ assigned thereto. The vector series $G_k$ has a dimension for specifying

measurement parameters $p_k(\tau_{k,0})$, $p_k(\tau_{k,1})$, $p_k(\tau_{k,2})$, ..., $p_k(\tau_{k,N-1})$, and a dimension for specifying relative time values $\tau_{k,0}$, $\tau_{k,1}$, $\tau_{k,2}$, ..., $\tau_{k,N-1}$. Thus, between the 0th vector series $G_0$ and the k-th, that is not 0th, vector series $G_k$, the multi-dimensional array data MD2 has inconsistency in terms of dimensions. For example, as shown in Fig. 3, in the case where the 0th data time series $D_0$ comprises a time series of two-dimensional vector quantities and the k-th, that is not 0th, data time series $D_k$ comprises a time series of scalar quantities, the data reconstructor 25 is able to reconstruct the three-dimensional vector series $G_0$ by using the data time series $D_0$, and reconstruct the two-dimensional vector series $G_0$, $G_1$, ..., $G_{K-1}$ by using the data time series $D_0$, ..., $D_{K-1}$, respectively.

It should be noted that, the series lengths of the K vector series $G_0$, $G_1$, ..., $G_{K-1}$ in each of the examples in Fig. 7 and Fig. 8 have the same values (= N), no limitation thereto intended. If i and j are set to arbitrarily selected integers that are in the range of 1-K and are different from each other (i ≠ j), the data reconstructor 25 may construct each of the multidimensional array data MD1 and the multidimensional array data MD2 such that the series length of the i-th vector series $G_i$ and the series length of the j-th vector series $G_j$ are different from each other.

Fig. 9 is a view illustrating an NN structure 31 as an example. Referring to Fig. 9, the NN structure 31 comprises: an input layer 41 which receives multidimensional array data MDx comprising vector series $G_0$, ..., $G_{K-1}$; an intermediate layer structure 51 which comprises recurrent neural networks (RNNs) $70_0$, $70_1$, ..., $70_{K-1}$ which are configured to process, in a parallel manner, the vector series $G_0$, $G_1$, ..., $G_{K-1}$ inputted via the input layer 41, respectively; and an output layer 61 which is configured to output predictive information based on outputs of the intermediate layer structure 51. The NN structure 31 is able to receive each of the multidimensional array data MD1 and the multidimensional array data MD2 shown in Fig. 7 and Fig. 8 as multidimensional array data MDx, and process it. In this regard, the multidimensional array data that can be processed in the NN structure 31 is not limited to that shown in each of Fig. 7 and Fig. 8.

The predictive information represents a set (Dr, Tp) comprised of: a risk factor Dr indicating the degree of an abnormal event; and a prediction time Tp at which the abnormal event is likely to occur. The risk factor Dr has a value in a range approximately from 0 to 1. The machine learning of the NN structure 31 can be performed such that the degree of an abnormal event becomes lower as the value of the risk factor Dr approaches closer to 0, and the degree of an abnormal event becomes higher as the value of the risk factor Dr approaches closer to 1.

As shown in Fig. 9, the intermediate layer structure 51 further comprises, in addition to the RNNs $70_0$, $70_1$, ..., $70_{K-1}$, a connecting layer 75 which is configured to connect outputs of the RNNs $70_0$, $70_1$, ..., $70_{K-1}$, and a feed-forward neural network 81 which is configured to process an output of the connecting layer 75. In the following description, a "feed-forward neural network" is referred to as a "feed-forward NN" for convenience of explanation.

The RNNs $70_0$, ..., $70_{K-1}$ are configured to be adapted to the sizes (vector dimensions) of inputted vector series $G_0$-$G_{K-1}$, and basically have the same configuration. The k-th RNN $70_k$ comprises a recurrent layer (RL) $71_k$ which is configured to process the k-th vector series $G_k$ inputted via the input layer 41, and a last output layer (LO) $72_k$. The recurrent layer $71_k$ is a neural network layer having one or more directed cycles therein, and is able to extract a time-dependent feature quantity from the inputted vector series $G_k$. For example, a long-short-term memory (LSTM) layer, a modified version of the LSTM layer, a gated recurrent unit (GRU) layer, or a quasi-RNN (QRNN) layer may be used as the recurrent layer $71_k$. The structures of the LSTM layer, modified version of the LSTM layer, GRU layer, and QRNN layer explained above are disclosed in Non-Patent Literature 1 below, for example.

Non-Patent Literature 1: Nesma M. Rezk, Madhura Purnaprajna, Tomas Nordstrom, Zain Ul-Abdin: Recurrent Neural Networks: An Embedded Computing Perspective. IEEE Access 8: 57967-57996 (2020).

Now, suppose that the k-th vector series $G_k$ comprises a series comprising N vectors $v_k(\tau_0)$, $v_k(\tau_1)$, $v_k(\tau_2)$, ..., $v_k(\tau_{N-1})$ (N is a positive integer showing a variable series length). The recurrent layer $71_k$ is configured to generate a series of N output vectors $h_k(\tau_0)$, ..., $h_k(\tau_{N-1})$ by sequentially processing the N vectors $v_k(\tau_0)$, ..., $v_k(\tau_{N-1})$. The last output layer $72_k$ is configured to select and output the last output vector $h_k(\tau_{N-1})$ in the series of the output vectors.

In this regard, each of the RNNs $70_0$-$70_{K-1}$ is individually configured to process a series of input vectors having an arbitrarily selected size and generates an output vector having an arbitrarily selected size. In this regard, the size of a vector means the number of components of the vector (vector dimension). For example, the RNNs $70_0$ and $70_1$ may be configured such that the 0-th RNN $70_0$ generates a forty-dimensional output vector (a vector having the size of 40) by using a series of three-dimensional vectors (a vector having the size of 3) as an input thereto, and, on the other hand, the 1st RNN $70_1$ generates a fifty-dimensional output vector (a vector having the size of 50) by using a series of two-dimensional vectors (a vector having the size of 2) as an input thereto.

The connecting layer 75 is able to connect output vectors $h_0(\tau_{N-1})$, ..., $h_{K-1}(\tau_{N-1})$ from the RNNs $70_0$-$70_{K-1}$. For example, if each output vector $h_k(\tau_{N-1})$ has the size of 40 (i.e., if it is a forty-dimensional vector), the connecting layer 75 is able to connect the output vectors $h_0(\tau_{N-1})$, ..., $h_{K-1}(\tau_{N-1})$ to generate a connected vector having the 40*K size (i.e., a forty-times-K-dimensional vector), and output it.

The feed-forward NN 81 comprises two sub-neural networks 90 and 100 which are arranged in parallel to each other. In the following description, a "sub-neural network" is referred to as a "sub-NN" for convenience of explanation.

Each of the sub-NNs 90 and 100 is configured to process the connected vector inputted from the connecting layer 75. The sub-NN 90 comprises a nonlinear conversion layer (NLL) 91, a linear conversion layer (LL) 92, a nonlinear conversion layer (NLL) 93, a linear conversion layer (LL) 94, a normalization layer (NL) 95, a linear conversion layer (LL) 97, a nonlinear conversion layer (NLL) 98, and a linear conversion layer (LL) 99.

The nonlinear conversion layer 91 is configured to perform, on each component in a connected vector inputted from the connecting layer 75, nonlinear conversion using an activation function. Regarding the activation function, a ramp function or a sigmoid function such as a logistic sigmoid function, a hyperbolic tangent function, or the like may be used as it, for example. The ramp function is also referred to as a ReLU (Rectified Linear Unit).

The linear conversion layer 92 is configured to perform, on a vector inputted from the nonlinear conversion layer 91, linear conversion using a weight matrix and a bias vector. If the weight matrix is represented by W, the bias vector is represented by b, an input vector is represented by $v_{in}$, and an output vector is represented by $v_{out}$, the linear conversion can generally be expressed as follows:

$$v_{out} = W \cdot v_{in} + b.$$

The nonlinear conversion layer 93 is configured to perform, on each component in an output vector from the linear conversion layer 92, nonlinear conversion using an activation function such as a ramp function or the like. The linear conversion layer 94 is configured to perform, on a vector inputted from the nonlinear conversion layer 93, linear conversion using a weight matrix and a bias vector. The normalization layer 95 is able to apply a normalization process to each component in a vector inputted from the linear conversion layer 94 to thereby generate a normalized vector. As the normalization process, a commonly known method such as subtractive normalization, divisive normalization, or the like can be applied. The linear conversion layer 97 is configured to perform, on the normalized vector, linear conversion using a weight matrix and a bias vector. The nonlinear conversion layer 98 is configured to perform, on each component in a vector inputted from the linear conversion layer 97, nonlinear conversion using an activation function such as a ramp function or the like. Finally, the linear conversion layer 99 performs, on a vector inputted from the nonlinear conversion layer 98, linear conversion using a weight matrix and a bias vector to thereby generate a risk factor Dr that is a scalar quantity. The risk factor Dr is outputted to the outside via a node of the output layer 61.

The basic structure of the sub-NN 100 is the same as the basic structure of the sub-NN 90, except for values of parameter sets (for example, components of a weight matrix and components of a bias vector) updated by a machine learning algorithm. As shown in Fig. 9, the sub-NN 100 comprises a nonlinear conversion layer (NLL) 101, a linear conversion layer (LL) 102, a nonlinear conversion layer (NLL) 103, a linear conversion layer (LL) 104, a normalization layer (NL) 105, a linear conversion layer (LL) 107, a nonlinear conversion layer (NLL) 108, and a linear conversion layer (LL) 109.

The nonlinear conversion layer 101 is configured to perform, on each component in a connected vector inputted from the connecting layer 75, nonlinear conversion using an activation function such as a ramp function or the like. The linear conversion layer 102 is configured to perform, on a vector inputted from the nonlinear conversion layer 101, linear conversion using a weight matrix and a bias vector. The nonlinear conversion layer 103 is configured to perform, on each component in an output vector from the linear conversion layer 102, nonlinear conversion using an activation function such as a ramp function or the like. The linear conversion layer 104 is configured to perform, on a vector inputted from the nonlinear conversion layer 103, linear conversion using a weight matrix and a bias vector. The normalization layer 105 is able to apply a normalization process to each component in a vector inputted from the linear conversion layer 104 to thereby generate a normalized vector. The linear conversion layer 107 is configured to perform, on the normalized vector, linear conversion using a weight matrix and a bias vector. The nonlinear conversion layer 108 is configured to perform, on a vector inputted from the linear conversion layer 107, nonlinear conversion using an activation function such as a ramp function or the like. Finally, the linear conversion layer 109 performs, on a vector inputted from the nonlinear conversion layer 108, linear conversion using a weight matrix and a bias vector to thereby generate a prediction time Tp that is a scalar quantity. The prediction time Tp is outputted to the outside via a node of the output layer 61.

As explained above, the NN stricture 31 shown in Fig. 9 comprises: RNNs $70_0$, $70_1$, ..., $70_{K-1}$ which are able to receive and process, in a parallel manner, vector series $G_0$, $G_1$, ..., $G_{K-1}$ inputted via the input layer 41, respectively; and a connecting layer 75 which is able to connect outputs of the RNNs $70_0$, $70_1$, ..., $70_{K-1}$. Accordingly, even if inconsistency has occurred between the vector series $G_0$, $G_1$, ..., $G_{K-1}$ (for example, even if inconsistency in terms of dimensions as shown in Fig. 8 has occurred), the NN structure 31 is able to compensate for the inconsistency, and, consequently, the inference calculator 27 is able to perform highly reliable calculations based on the NN structure 31. Further, each vector series $G_k$ comprises a series comprising multiple vectors, each comprising, as array elements, at least one measurement parameter and a relative time value assigned thereto, and, accordingly, the NN structure 31 is able to process a measurement parameter set with which time information has been associated accurately. As a result, it becomes possible to calculate predictive information (Dr, Tp) with high accuracy.

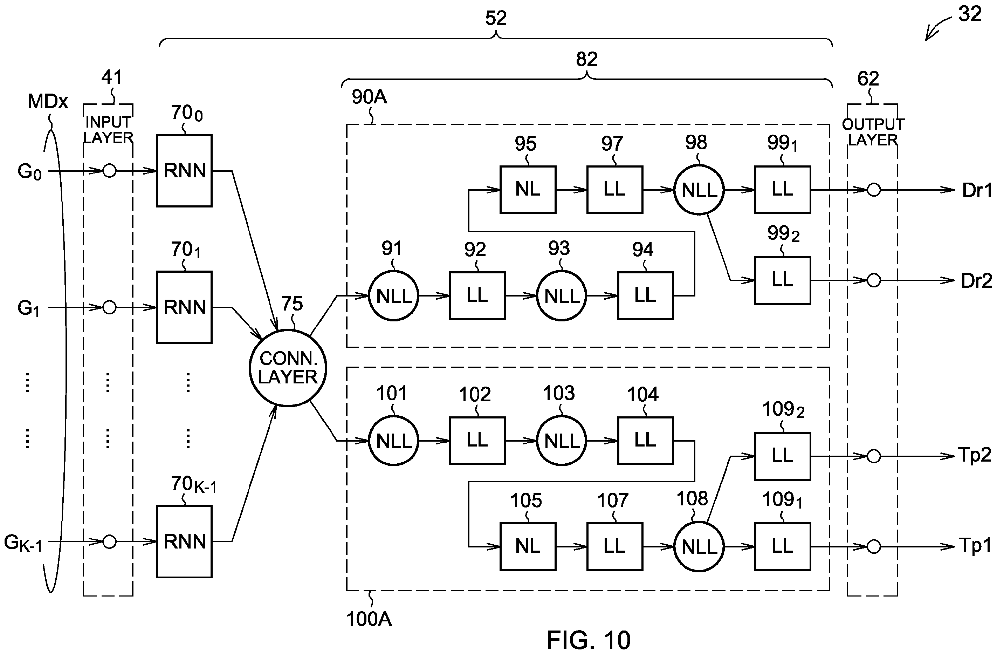

The NN structure 31 is configured to be able to predict an occurrence of a one kind of abnormal event, no limitation thereto intended; and the structure of the NN structure 31 can be modified appropriately to allow for prediction of occurrences of two or more kinds of abnormal events. Fig. 10 is a view illustrating an NN structure 32 which is a modified example of the NN structure 31. The NN structure 32 is configured to be able to predict occurrences of two kinds of abnormal events.

Referring to Fig. 10, the NN structure 32 comprises: an input layer 41 which receives multidimensional array data MDx comprising vector series $G_0$, ..., $G_{K-1}$; an intermediate layer structure 52 which comprises RNNs $70_0$, $70_1$, ..., $70_{K-1}$ which are configured to process, in a parallel manner, vector series $G_0$, $G_1$, ..., $G_{K-1}$ inputted via the input layer 41, respectively; and an output layer 62 which is configured to output two kinds of predictive information based on outputs of the intermediate layer structure 52. The intermediate layer structure 52 further comprises a connecting layer 75 which is configured to connect outputs of the RNNs $70_0$, ..., $70_{K-1}$, and a feed-forward NN 82 which is configured to process an output of the connecting layer 75.

The feed-forward NN 82 comprises two sub-neural networks 90A and 100A which are arranged in parallel to each other, and each of the sub-NNs 90A and 100A is configured to process a connected vector inputted from the connecting layer 75.

The structure of the sub-NN 90A is the same as the structure of the sub-NN 90, except that the sub-NN 90A comprises two linear conversion layers (LLs) $99_1$ and $99_2$ in place of the linear conversion layer 99 in the sub-NN 90 in Fig. 9. The linear conversion layer $99_1$ performs, on a vector inputted from the nonlinear conversion layer 98, linear conversion using a weight matrix and a bias vector to thereby generate a risk factor Dr1 that is a scalar quantity and indicates the degree of a first abnormal event. On the other hand, the linear conversion layer $99_2$ performs, on a vector inputted from the nonlinear conversion layer 98, linear conversion using a weight matrix and a bias vector to thereby generate a risk factor Dr2 that is a scalar quantity and indicates the degree of a second abnormal event. The risk factor Dr1 and the risk factor Dr2 are outputted to the outside via nodes of the output layer 62.

The structure of the sub-NN 100A is the same as the structure of the sub-NN 100, except that the sub-NN 100A comprises two linear conversion layers (LLs) $109_1$ and $109_2$ in place of the linear conversion layer 109 in the sub-NN 100 in Fig. 9. The linear conversion layer $109_1$ performs, on a vector inputted from the nonlinear conversion layer 108, linear conversion using a weight matrix and a bias vector to thereby generate a prediction time Tp1 at which the first abnormal event is likely to occur. On the other hand, the linear conversion layer $109_2$ performs, on a vector inputted from the nonlinear conversion layer 108, linear conversion using a weight matrix and a bias vector to thereby generate a prediction time Tp2 at which the second abnormal event is likely to occur. The prediction time Pt1 and the prediction time Pt2 are outputted to the outside via nodes of the output layer 62.

In this regard, in the NN structure 31 in Fig. 9, the structure of the sub-NN 90 may be modified such that the sub-NN 90 comprises three or more linear conversion layers in place of the linear conversion layer 99, and the structure of the sub-NN 100 may be modified such that the sub-NN 100 comprises three or more linear conversion layers in place of the linear conversion layer 109. This allows for construction of an NN structure which is able to predict occurrences of three or more kinds of abnormal events.

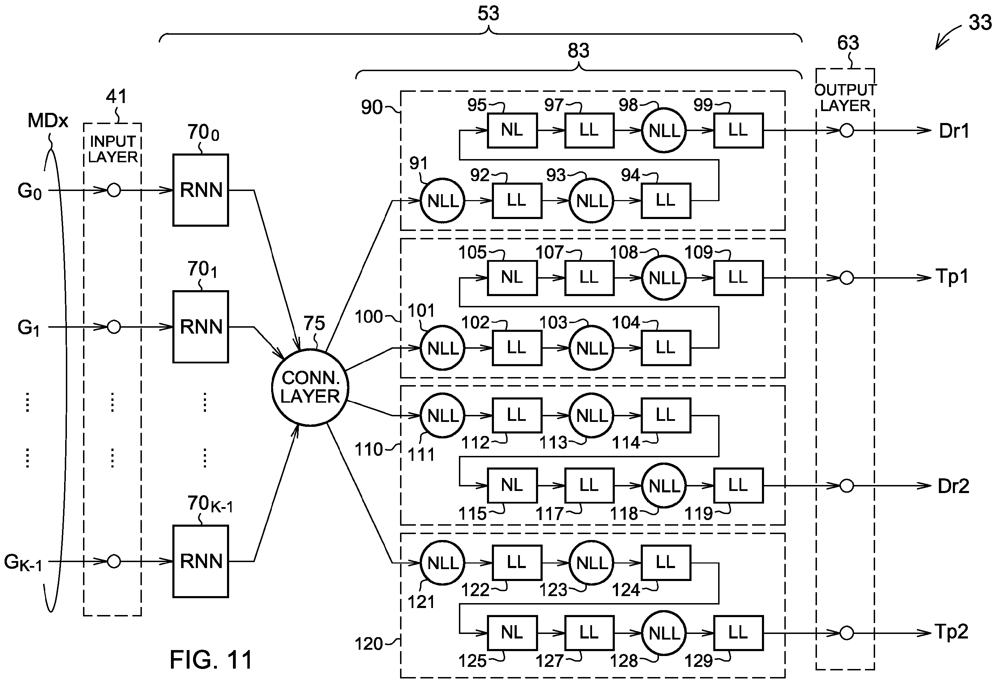

Fig. 11 is a view illustrating an NN structure 33 which is a different modified example of the NN structure 31. The NN structure 33 is configured to be able to predict occurrence of two kinds of abnormal events.

Referring to Fig. 11, the NN structure 33 comprises: an input layer 41 which receives multidimensional array data MDx comprising vector series $G_0$, ..., $G_{K-1}$; an intermediate layer structure 53 which comprises RNNs $70_0$, $70_1$, ..., $70_{K-1}$ which are configured to process, in a parallel manner, vector series $G_0$, $G_1$, ..., $G_{K-1}$ inputted via the input layer 41, respectively; and an output layer 63 which is configured to output two kinds of predictive information based on outputs of the intermediate layer structure 53. The intermediate layer structure 53 further comprises a connecting layer 75 which is configured to connect outputs of the RNNs $70_0$, ..., $70_{K-1}$, and a feed-forward NN 83 which is configured to process an output of the connecting layer 75.

The feed-forward NN 83 comprises four sub-neural networks 90, 100, 110, and 120 which are arranged in parallel to each other, and each of the sub-NNs 90, 100, 110, and 120 is configured to process a connected vector inputted from the connecting layer 75.

The structures of the sub-NNs 90 and 100 shown in Fig. 11 are the same as the structures of the sub-NNs 90 and 100 shown in Fig. 9, respectively. The sub-NN 90 is able to generate a risk factor Dr1 that indicates the degree of a first abnormal event, and the sub-NN 100 is able to generate a prediction time Tp1 at which the first abnormal event is likely to occur. The risk factor Dr1 and the prediction time Tp1 are outputted to the outside via nodes of the output layer 63.

The basic structures of the sub-NNs 110 and 120 shown in Fig. 11 are the same as those of the sub-NNs 110 and 120, except for values of parameter sets (for example, components of a weight matrix and components of a bias vector) updated by a machine learning algorithm.

As shown in Fig. 11, the sub-NN 110 comprises a nonlinear conversion layer (NLL) 111, a linear conversion layer (LL) 112, a nonlinear conversion layer (NLL) 113, a linear conversion layer (LL) 114, a normalization layer (NL) 115, a linear conversion layer (LL) 117, a nonlinear conversion layer (NLL) 118, and a linear conversion layer (LL) 119. The nonlinear conversion layer 111 is configured to perform, on each component in a connected vector inputted from the connecting layer 75, nonlinear conversion using an activation function such as a ramp function or the like. The linear conversion layer 112 is configured to perform, on a vector inputted from the nonlinear conversion layer 111, linear conversion using a weight matrix and a bias vector. The nonlinear conversion layer 113 is configured to perform, on each component in an output vector from the linear conversion layer 112, nonlinear conversion using an activation function such as a ramp function or the like. The linear conversion layer 114 is configured to perform, on a vector inputted from the nonlinear conversion layer 113, linear conversion using a weight matrix and a bias vector. The normalization layer 115 is able to apply a normalization process to each component in a vector inputted from the linear conversion layer 114 to thereby generate a normalized vector. The linear conversion layer 117 is configured to perform, on the normalized vector, linear conversion using a weight matrix and a bias vector. The nonlinear conversion layer 118 is configured to perform, on each component in a vector inputted from the linear conversion layer 117, nonlinear conversion using an activation function such as a ramp function or the like. Finally, the linear conversion layer 119 performs, on a vector inputted from the nonlinear conversion layer 118, linear conversion using a weight matrix and a bias vector to thereby generate a risk factor Dr2 that indicates the degree of a second abnormal event. The risk factor Dr2 is outputted to the outside via a node of the output layer 63.

As shown in Fig. 11, the sub-NN 120 comprises a nonlinear conversion layer (NLL) 121, a linear conversion layer (LL) 122, a nonlinear conversion layer (NLL) 123, a linear conversion layer (LL) 124, a normalization layer (NL) 125, a linear conversion layer (LL) 127, a nonlinear conversion layer (NLL) 128, and a linear conversion layer (LL) 129. The nonlinear conversion layer 121 is configured to perform, on each component in a connected vector inputted from the connecting layer 75, nonlinear conversion using an activation function such as a ramp function or the like. The linear conversion layer 122 is configured to perform, on a vector inputted from the nonlinear conversion layer 121, linear conversion using a weight matrix and a bias vector. The nonlinear conversion layer 123 is configured to perform, on each component in an output vector from the linear conversion layer 122, nonlinear conversion using an activation function such as a ramp function or the like. The linear conversion layer 124 is configured to perform, on a vector inputted from the nonlinear conversion layer 123, linear conversion using a weight matrix and a bias vector. The normalization layer 125 is able to apply a normalization process to each component in a vector inputted from the linear conversion layer 124 to thereby generate a normalized vector. The linear conversion layer 127 is configured to perform, on the normalized vector, linear conversion using a weight matrix and a bias vector. The nonlinear conversion layer 128 is configured to perform, on each component in a vector inputted from the linear conversion layer 127, nonlinear conversion using an activation function such as a ramp function or the like. Finally, the linear conversion layer 129 performs, on a vector inputted from the nonlinear conversion layer 128, linear conversion using a weight matrix and a bias vector to thereby generate a prediction time Tp2 at which the second abnormal event is likely to occur. The prediction time Tp2 is outputted to the outside via a node of the output layer 63.

In this regard, with respect to the NN structure 31 in Fig. 9, two or more combinations of sub-NNs, each combination having a basic structure similar to the basic structure of the combination of the sub-NNs 90 and 100, may be added to the NN structure 31. This allows for construction of an NN structure which is able to predict occurrence of three or more kinds of abnormal events.

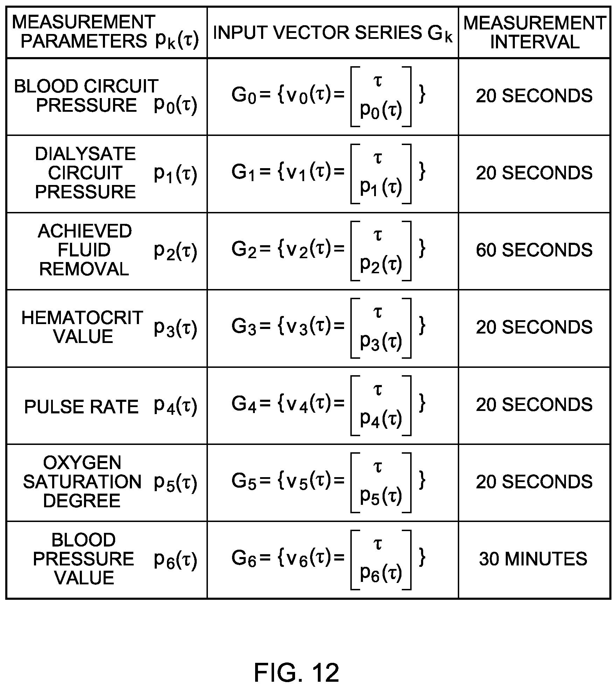

Next, in the following description, an practical example of calculations based on the NN structure 31 shown in Fig. 9 will be explained with reference to Figs. 12-14.

The practical example was performed by using a measurement data set obtained by monitoring a living-body state of a human, who is an observed object Tgt, during dialysis. An abnormal event that is set to be a prediction object is a blood-pressure drop, and predictive information represents a combination of a risk factor Dr of the blood-pressure drop and a prediction time Tp (in unit of seconds) at which the blood-pressure drop is likely to occur. The value of the risk factor Dr is in a range from approximately 0 to 1. The degree of the blood-pressure drop becomes lower as the value of the risk factor Dr approaches closer to 0, and the degree of the blood-pressure drop becomes higher as the value of the risk factor Dr approaches closer to 1.

Fig. 12 is a view illustrating, in a table form, relationship between seven kinds of measurement parameters $p_k(\tau)$ and two-dimensional input vector series $G_k$ that used actually in the practical example, where the index k is an integer in the range from 0 to 6. A blood circuit pressure $p_0(\tau)$, a dialysate circuit pressure $p_1(\tau)$, an achieved fluid removal $p_2(\tau)$, a hematocrit value $p_3(\tau)$, a pulse rate $p_4(\tau)$, an oxygen saturation degree $p_5(\tau)$, and a blood pressure value $p_6(\tau)$ are set to be monitored parameters and are actually measured. Each of the measurement parameters $p_0(\tau)$-$p_6(\tau)$ is a scalar quantity. In this regard, the achieved fluid removal $p_2(\tau)$ is an accumulated quantity of water removed from a human body; and the hematocrit value $p_3(\tau)$ is a ratio of the volume of blood corpuscle components in blood, and is a value that can be an index of the degree of blood concentration. The blood pressure value $p_6(\tau)$ is a value measured by using a hemodynamometer using a manchette. A manchette is a long and narrow circular strip which is connected to a hemodynamometer and wraps around an upper arm of a human when blood pressure is measured.

The achieved fluid removal $p_2(\tau)$ was measured every 60 seconds, the blood pressure value $p_6(\tau)$ was measured every 30 minutes, and each of other parameters $p_0(\tau)$, $p_1(\tau)$, and $p_3(\tau)$- $p_5(\tau)$ was measured every 20 seconds. Since measurement intervals were not uniform as shown above, the multidimensional array data comprising vector series $G_0$, $G_1$, ..., $G_{K-1}$ have inconsistency in terms of measurement times. Regarding the above, it is possible to compensate for the inconsistency, since the RNNs $70_0$-$70_6$ in the NN structure 31 are able to receive and process, in a parallel manner, the vector series $G_0$, $G_1$, ..., $G_{K-1}$, respectively.

Regarding learning data and test data, 50 measurement data sets $\Lambda_1$-$\Lambda_{50}$ that show occurrence of an abnormal event (blood-pressure drop) and 125 measurement data sets $\Phi_1$-$\Phi_{125}$ that show non-occurrence of the abnormal event were prepared as them. The learning data were 40 measurement data sets $\lambda_1$-$\lambda_{40}$ randomly selected from the 50 measurement data sets $\Lambda_1$-$\Lambda_{50}$, and 100 measurement data sets $\varphi_1$-$\varphi_{100}$ randomly selected from the 125 measurement data sets $\Phi_1$-$\Phi_{125}$. By using the learning data, the NN structure 31 was trained to learn relationship between the measurement data and occurrence/non-occurrence of an abnormal event and the time of occurrence of the abnormal event. As the test data for verifying accuracy of prediction, remaining 10 data sets of the 50 measurement data sets $\Lambda_1$-$\Lambda_{50}$ and remaining 25 data sets of the 125 measurement data sets $\Phi_1$-$\Phi_{125}$ were used.

Specifically, time intervals of 20 minutes (=1200 seconds) were set with the start of monitoring as the origin, and a measurement data set from the origin to the time interval immediately before the occurrence of the abnormal event, not including the time of occurrence, was used as an object to be learned. In addition, another measurement data set for time intervals 20 and 40 minutes shorter than that time interval were also used as an object to be learned. Therefore, the learning data does not include data after the occurrence of the abnormal event. This is because the purpose is to investigate the predictability of the occurrence of an abnormal event (hypotension) and its occurrence time, caused by measurement data before the occurrence of the abnormal event. For data in which no abnormal event was observed, a risk value of 0 was assigned, and a time further away from the endpoint of the monitoring process (= 20000 seconds) was uniformly assigned as the occurrence time.

For the test data, a time interval from the start of the monitoring to 2 hours (=7200 seconds) was set as the initial time interval. Measurement data sets in multiple time intervals obtained by extending the length from this initial time interval in 20-minute (1200 second) increments were used as the test data. The reason for this is to realize conditions that simulate the situation in actual treatment where measurement data increases in real-time, and to explore the earliest stage at which prediction of abnormal events is possible. Using this test data, calculations were performed based on the learned NN structure 31. Data sets with a risk factor Dr exceeding 0.5 were determined to have abnormal events. For the prediction time Tp, the first time point with a value less than 5 hours of treatment time (= 1800 seconds) was adopted.

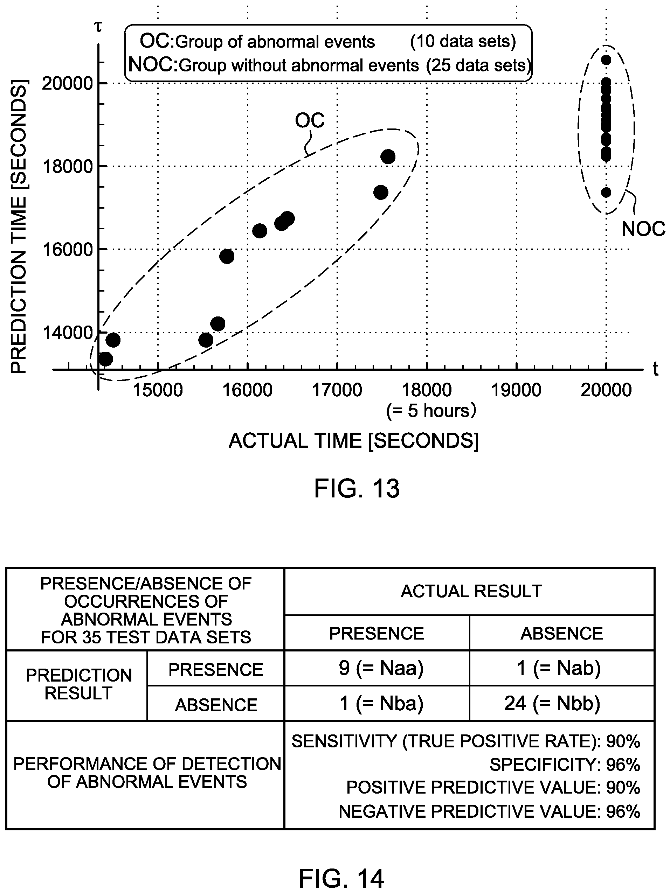

Fig. 13 is a graph showing the result of the practical example under the above condition. In the graph in Fig. 13, a horizontal axis corresponds to actual time t (in unit of seconds) at which an abnormal event occurred, and a vertical axis corresponds to prediction time $\tau$ at which an abnormal event is likely to occur. Fig. 14 is a view showing, in a table form, the result of the practical example. That is, the number of true positives (Naa) was 9, the number of false positives (Nab) was 1, the number of true negatives (Nbb) was 24, and the number of false negatives (Nba) was 1. Accordingly, good detection performance was confirmed, specifically, the sensitivity (true positive rate) was 90 % (=Naa/(Naa+Nba)), the specificity was 96 % (=Nbb/(Nab+Nbb)), the positive predictive value was 90 % (=Naa/(Naa+Nab)), and the negative predictive value was 96 % (=Nbb/(Nbb+Nba)). Each prediction time Tp was that predicting occurrence of the abnormal event 20 minutes or more than 20 minutes earlier than that, although the graph in Fig. 13 does not show it. Accordingly, it becomes possible to obtain a period of time that allows to perform action for preventing blood-pressure drop, and, consequently, it is considered that there may be its merit in practical use.

As explained above, each of the NN structures 31, 32, and 33 shown in Figs. 9-11 is configured to receive only the multidimensional array data MDx comprising multiple vector series $G_0, G_1, ..., G_{K-1}$. Alternatively, the configuration of each of the above NN structures may be modified to receive the multidimensional array data MDx and attribute information of the observed object Tgt.

For example, as the attribute information of the observed object Tgt, a scalar quantity or a vector quantity that comprises intrinsic information of a living body such as a human or the like can be used. More specifically, for example, numerical values representing an age, a gender, a body mass index (BMI), and presence/absence of a specific disease such as diabetes or the like may be used as the attribute information. In such a case, the data reconstructor 25 or the inference calculator 27 shown in Fig. 1 may comprise an internal memory (which is not shown in the figure) in which the attribute information has been stored in advance, and the attribute information read out of the internal memory may be supplied to the NN structure. Alternatively, the data reconstructor 25 or the inference calculator 27 may be configured to obtain the attribute information from an external information source (which is not shown in the figure), and supply the obtained attribute information to the NN structure.

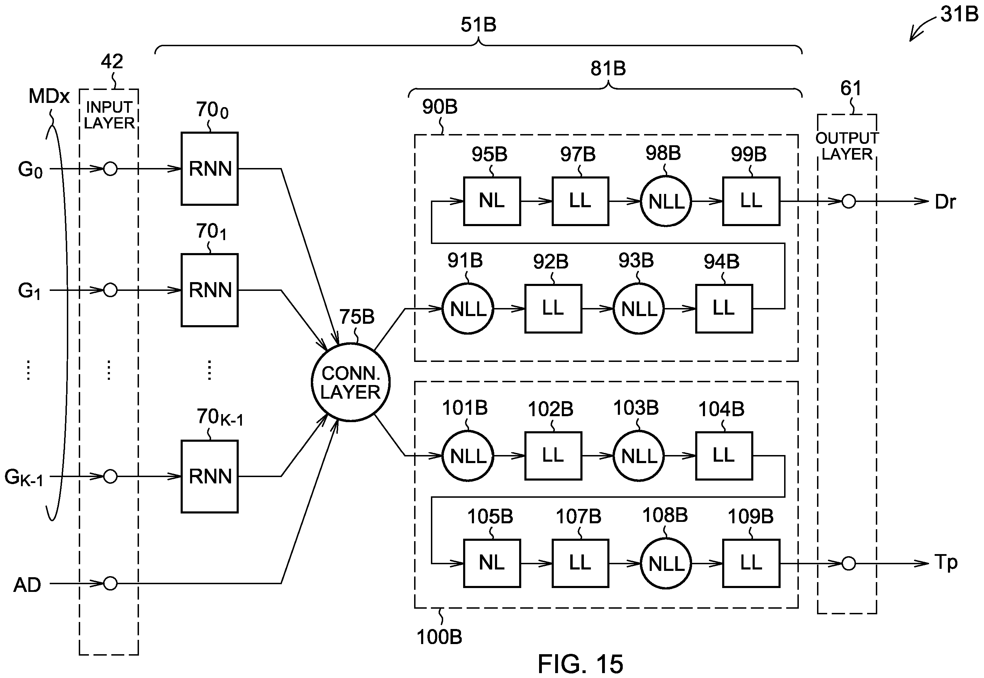

Fig. 15 is a view illustrating an NN structure 31B which is an example of modification of the NN structure 31 shown in Fig. 9. The NN structure 31B comprises: an input layer 42 which receives multidimensional array data MDx comprising vector series $G_0, ..., G_{K-1}$ and attribute information AD of an observed object Tgt; an intermediate layer structure 51B which is configured to process the vector series $G_0, ..., G_{K-1}$ and the attribute information AD; and an output layer 62 which is configured to output two kinds of predictive information based on outputs of the intermediate layer structure 51B. The intermediate layer structure 51B comprises: RNNs $70_0, 70_1, ..., 70_{K-1}$ which are configured to process, in a parallel manner, the vector series $G_0, G_1, ..., G_{K-1}$, respectively; a connecting layer 75B; and a feed-forward NN 81B which comprises sub-NNa 90B and 100B which are arranged in parallel to each other.

The connecting layer 75B is configured to generate a connected vector by connecting K vectors generated in the RNNs $70_0, 70_1, ..., 70_{K-1}$ and the scalar value or the vector of the attribute information AD. For example, the connecting layer 75B is configured to connect K twenty-dimensional vectors inputted from the RNNs $70_0, 70_1, ..., 70_{K-1}$, respectively, with a ten-dimensional vector of the attribute information AD to thereby generate (K*20+10)-dimensional connected vector.

Each of the sub-NNs 90B and 100B is configured to process a connected vector inputted from the connecting layer 75B. The sub-NN 90B has a basic structure that is the same as that of the sub-NN 90 shown in Fig. 9. The sub-NN 90B comprises a nonlinear conversion layer (NLL) 91B, a linear conversion layer (LL) 92B, a nonlinear conversion layer (NLL) 93B, a linear conversion layer (LL) 94B, a normalization layer (NL) 95B, a linear conversion layer (LL) 97B, a nonlinear conversion layer (NLL) 98B, and a linear conversion layer (LL) 99B. The nonlinear conversion layer 91B, the linear conversion layer 92B, the nonlinear conversion layer 93B, the linear conversion layer 94B, the normalization layer 95B, the linear conversion layer 97B, the nonlinear conversion layer 98B, and the linear conversion layer 99B have basic structures that are the same as those of the nonlinear conversion layer 91, the linear conversion layer 92, the nonlinear conversion layer 93, the linear conversion layer 94, the normalization layer 95, the linear conversion layer 97, the nonlinear conversion layer 98, and the linear conversion layer 99 in the sub-NN 90 shown in Fig. 9, respectively. The sub-NN 90B generates a risk factor Dr that is a scalar quantity, and the risk factor Dr is outputted to the outside via a node of the output layer 61.

On the other hand, the sub-NN 100B also has a basic structure that is the same as that of the sub-NN 100 shown in Fig. 9. The sub-NN 100B comprises a nonlinear conversion layer (NLL) 101B, a linear conversion layer (LL) 102B, a nonlinear conversion layer (NLL) 103B, a linear conversion layer (LL) 104B, a normalization layer (NL) 105B, a linear conversion layer (LL) 107B, a nonlinear conversion layer (NLL) 108B, and a linear conversion layer (LL) 109B. The nonlinear conversion layer 101B, the linear conversion layer 102B, the nonlinear conversion layer 103B, the linear conversion layer 104B, the normalization layer 105B, the linear conversion layer 107B, the nonlinear conversion layer 108B, and the linear conversion layer 109B have basic structures that are the same as those of the nonlinear conversion layer 101, the linear conversion layer 102, the nonlinear conversion layer 103, the linear conversion layer 104, the normalization layer 105, the linear conversion layer 107, the nonlinear conversion layer 108, and the linear conversion layer 109 in the sub-NN 90 shown in Fig. 9, respectively. The sub-NN 100B generates a prediction time Tp that is a scalar quantity, and the prediction time Tp is outputted to the outside via a node of the output layer 61.

As explained above, since the NN structure 31B shown in Fig. 15 is able to receive and process attribute information AD of an observed object Tgt in addition to multidimensional array data Dx that comprises, as array elements, measurement parameters and relative time values assigned to the measurement parameters, it becomes possible to calculate, with high accuracy, predictive information (Dr, Tp) relating to the observed object Tgt.

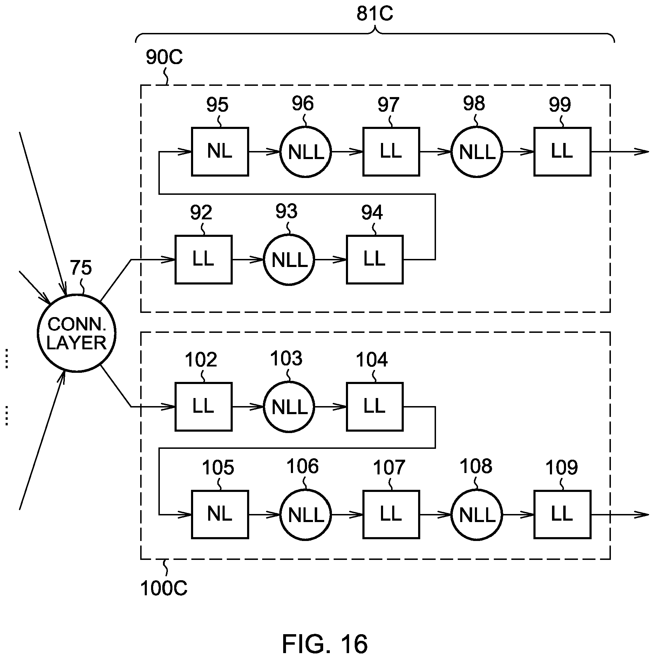

Each of the structures of the feed-forward NNs shown in Figs. 9-11 and 15 is an example, no limitation thereto intended. For example, a feed-forward NN 81C shown in Fig. 16 may be used in place of the feed-forward NN 81 shown in Fig. 9. The feed-forward NN 81C shown in Fig. 16 comprises two sub-NNs 90C and 100C. The sub-NN 90C is that configured by removing the nonlinear conversion layer 91 in the sub-NN 90 in Fig. 9 and arranging a nonlinear conversion layer (NLL) 96 in a position between the normalization layer 95 and the linear conversion layer 97. On the other hand, the sub-NN 100C is that configured by removing the nonlinear conversion layer 101 in the sub-NN 100 in Fig. 9 and arranging a nonlinear conversion layer (NLL) 106 in a position between the normalization layer 105 and the linear conversion layer 107.

Further, each of the sub-NNs 90, 100, 90A, 100A, 110, 120, 90B, and 100B shown in Figs. 9-11 and 15 comprises a combination of a linear conversion layer, a normalization layer, and a linear conversion layer which are connected in series (for example, a combination of the linear conversion layer 94, the normalization layer 95, and the linear conversion layer 97 as shown in Fig. 9). A combination of a linear conversion layer and a normalization layer, formed by removing, from the above-explained combination, the linear conversion layer following the normalization layer, may be adopted (For example, a combination of the linear conversion layer 94 and the normalization layer 95, that is configured by removing the linear conversion layer 97 from the combination of the linear conversion layer 94, the normalization layer 95, and the linear conversion layer 97 shown in Fig. 9, may be adopted).

Next, an example of multidimensional array data that does not include inconsistency will be explained, and, also, various kinds of examples of NN structures, each being configured to be able to receive and process multidimensional array data that does not include inconsistency, will be explained.

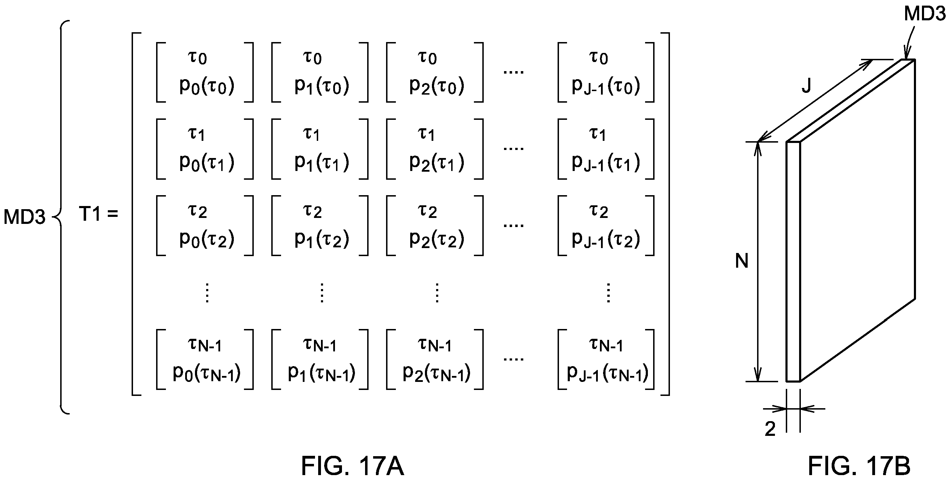

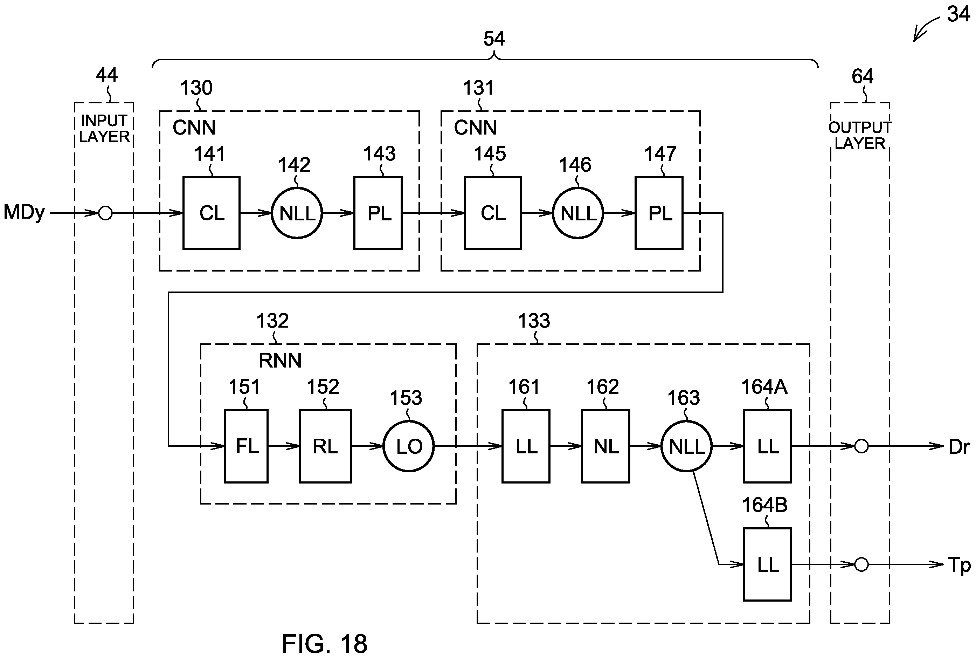

Each of Figs. 17A and 17B is a view illustrating multidimensional array data MD3 that does not have inconsistency. Each of Figs. 18 and 20-24 is a view illustrating an NN structure configured to be able to receive and process the multidimensional array data MD3.

The multidimensional array data MD3 shown in Fig. 17A comprises a third-order tensor T1. The multidimensional array data MD3 comprises, as array elements of the tensor T1, measurement parameters $p_j(\tau_i)$ and relative time values $\tau_i$ assigned thereto. In this regard, the index j is an integer in the range from 0 to J-1, wherein J is an integer equal to or greater than 2; and the index i is an integer in the range from 0 to N-1, wherein N is a variable positive integer. As shown in Fig. 17B, the multidimensional array data MD3 has the size of N*J*2. For example, the data reconstructor 25 shown in Fig. 1 is able to reconstruct a measurement parameter $p_j(\tau_i)$ having the index j, from a scalar-quantity (measurement-value) series that forms a j-th data time series $D_j$, no limitation thereto intended. Further, in the case where the j-th data time series $D_j$ comprises a multidimensional-vector-quantity series (for example, in the case of the data time series $D_0$ shown in Fig. 3), the data reconstructor 25 is able to decompose the multidimensional-vector-quantity series into multiple scalar-quantity series, and obtain measurement parameters in the tensor T1 from the respective scalar-quantity series. In the case where a measurement parameter to which a relative time value $\tau_i$ is to be assigned is absent, the data reconstructor 25 may perform interpolation or zero padding for supplementation for the absent measurement parameter.

In this regard, the size of multidimensional array data formed by a tensor is not limited to N*J*2, and it may be changed to N*J*($H_C$+1). In that case, $H_C$ is an integer equal to or greater than 1. For example, if supply of time series, each comprising measurement quantities obtained by each of multiple color sensors, is received, the data reconstructor 25 is able to reconstruct multidimensional array data having the size of N*J*($H_C$+1), where $H_C$ is the number of the color sensors.

Fig. 18 is a view illustrating an NN structure 34 as an example. The NN structure 34 comprises: an input layer 44 which receives multidimensional array data MDy comprising a third-order tensor; an intermediate layer structure 54 which is configured to process the multidimensional array data MDy inputted via the input layer 44; and an output layer 64 which is configured to output predictive information (Dr, Tp) based on an output of the intermediate layer structure 54. The intermediate layer structure 54 comprises convolutional neural networks (CNNs) 130 and 131, and a recurrent neural network (RNN) 132. The NN structure 34 is configured to receive and process, as the multidimensional array data MDy, the multidimensional array data MD3 comprising the third-order tensor T1 shown in Fig. 17.

The intermediate layer structure 54 further comprises, in addition to the CNNs 130 and 131 and the RNN 132, a feed-forward NN 133 which is configured to process an output of the RNN 132. The CNNs 130 and 131, the RNN 132, and the feed-forward NN 133 are connected in series.

The CNN 130 comprises a convolutional layer (CL) 141, a nonlinear conversion layer (NLL) 142, and a pooling layer (PL) 143. The convolutional layer 141 is configured to perform, on inputted third-order-tensor data, convolution operation using M filters to thereby generate second-order-tensor data or third-order-tensor data. In this regard, M is an integer that represents the number of filters, i.e., the number of channels, and is equal to or greater than 1. The convolution operation comprises a convolution using a filter and an addition using a bias. In the case where a single filter is used (M=1), the convolutional layer 141 may output second-order-tensor (i.e., matrix) data; and, in the case where filters are used (M is equal to or greater than 2), the convolutional layer 141 may output third-order-tensor data. The nonlinear conversion layer 142 is configured to perform, on each element in the tensor inputted from the convolutional layer 141, nonlinear conversion using an activation function. Regarding the activation function, a ramp function or a sigmoid function such as a logistic sigmoid function, a hyperbolic tangent function, or the like may be used as it, for example.

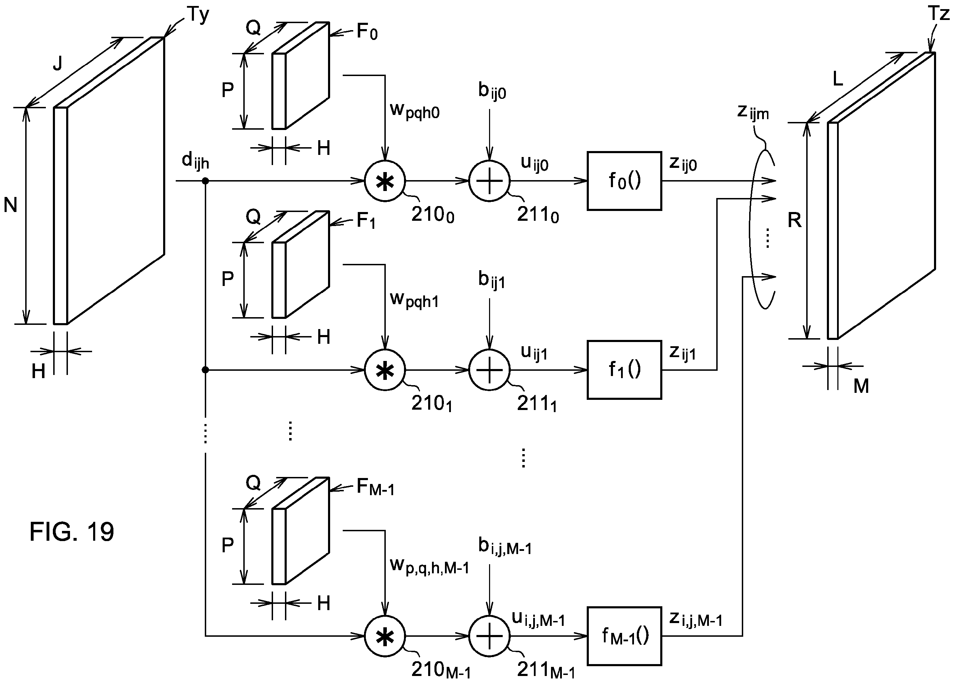

Fig. 19 is an illustration for explaining a method of convolutions and nonlinear transformations. Fig. 19 represents an input tensor Ty, filters $F_0$, $F_1$, ..., $F_{M-1}$, convolution operators $210_0$, $210_1$, ..., $210_{M-1}$, addition operator $211_0$, $211_1$, ..., $211_1$, activation functions $f_0()$, $f_1()$, ..., $f_{M-1}()$, and an output tensor Tz. The input tensor Ty is a tensor having the size of N*J*H. In this regard, each of N and J is an integer equal to or greater than 2, and H is an integer equal to or greater than 1. In the case of H=1, the input tensor Ty becomes a second-order tensor; and, in the case where the value of H is equal to or greater than 2, the input tensor Ty becomes a third order-tensor. The convolutional layer 141 in the CNN 130 shown in Fig. 18 may be configured to perform convolution operation by using a third order-tensor as an input thereto. An element in the input tensor Ty can be represented as $d_{ijh}$. In this regard, the indexes I and j are integers for specifying a predetermined square region in the input tensor Ty, and the index h is an integer in the range from 0 to H-1. M is an integer that shows the number of filters $F_0$, $F_1$, ..., $F_{M-1}$, i.e., the number of channels, and is equal to or greater than 3. In the example in Fig. 19, the number of channels is 3 or more than 3, no limitation thereto intended.

A filter $F_m$ in a m-th channel comprises a tensor having the size of P*Q*H. In this regard, P is an integer that is smaller than N and equal to or greater than 2, and Q is an integer that is smaller than J and equal to or greater than 2. In the case of H=1, the filter $F_m$ comprises a second-order tensor (a matrix); and, in the case where the value of H is equal to or greater than 2, the filter $F_m$ comprises a third-order tensor. The convolutional layer 141 in the CNN 130 shown in Fig. 18 may be configured to perform convolution operation by using at least one filter comprising a third-order tensor. An element (a weight coefficient) in the filter $F_m$ can be represented as $w_{pqhm}$. In this regard, the index p is an integer in the range from 0 to P-1, the index q is an integer in the range from 0 to Q-1, and the index h is an integer in the range from 0 to H-1.

Referring to Fig. 19, convolution operators $210_0$, $210_1$, ..., $210_{M-1}$ are able to perform convolutional operation on the elements $d_{ijh}$ in the input tensor Ty in a parallel manner. The addition operators $211_0$, $211_1$, ..., $211_{M-1}$ are able to perform, in a parallel manner, an addition for adding biases $b_{ij0}$, $b_{ij1}$, ..., $b_{i,j,M-1}$ to the outputs of the convolution operators $210_0$, $210_1$, ..., $210_{M-1}$, respectively. A bias $B_{ijm}$ in a m-th channel is provided as a second-order tensor (a matrix).

Specifically, for example, it is possible to perform convolutions in each channel according to the following formula:

(Formula 1)

$$u_{ijm} = \sum_{h=0}^{H-1} \sum_{p=0}^{P-1} \sum_{q=0}^{Q-1} d_{i+p,j+q,h} \cdot w_{pqhm} + b_{ijm}.$$

After completing the convolution operation, as represented by the formula shown below, nonlinear conversion using an activation function $f_m()$ is performed in each channel:

$$(Formula\ 2)$$

$$z_{ijm} = f_m(u_{ijm}).$$

By synthesizing elements $z_{ijm}$ calculated by performing nonlinear conversion in all channels, the output tensor Tz is formed. As shown in Fig. 19, the output tensor Tz has the size of R*L*M. In this regard, R is an integer equal to or smaller than N, and L is an integer equal to or smaller than J. In the case of a single channel (in the case where a single filer is used), the output tensor Tz comprises a second-order tensor (a matrix); and, in the case of multiple channels (in the case where filers are used), the output tensor Tz comprises a third-order tensor.

Referring to Fig. 18, the pooling layer 143 in the CNN 130 is configured to apply, according to a predetermined stride value, pooling operation to the tensor data inputted from the nonlinear conversion layer 142 to thereby generate an output tensor. Regarding the pooling operation, a publicly-known method such as average pooling, max pooling, Lp pooling, or the like can be applied as it.

The CNN 131 comprises a convolutional layer (CL) 145, a nonlinear conversion layer (NLL) 146, and a pooling layer (PL) 147. The convolutional layer 145 is configured to perform, on tensor data inputted from the CNN 130 in the previous stage, convolution operation using one or more filters (i.e., a convolution using a filter and an addition using a bias). The nonlinear conversion layer 146 is configured to perform, on each element in the tensor inputted from the convolutional layer 145, nonlinear conversion using an activation function such as a ramp function or the like. Further, the pooling layer 147 is configured to apply, according to a predetermined stride value, pooling operation such as average pooling or the like to an output of the nonlinear conversion layer 146.

The RNN 132 comprises a flattening layer (FL) 151, a recurrent layer (RL) 152, and a last output layer (LO) 153. The flattening layer 151 is able to generate, from an output of the CNN 131 in the previous stage, matrix data comprising a vector series (i.e., a series of multiple vectors). The recurrent layer 152 is a neural network layer having one or more directed cycles therein, and is able to extract a time-dependent feature quantity from the inputted vector series. For example, an LSTM layer, a modified version of the LSTM layer, a GRU layer, or a QRNN layer may be used as the recurrent layer 152. The recurrent layer 152 is configured to process a vector series inputted from the flattening layer 151 to thereby generate an output vector series. The last output layer 153 is configured to select and output the last output vector in the output vector series.

The feed-forward NN 133 comprises a linear conversion layer (LL) 161, a normalization layer (NL) 162, a nonlinear conversion layer (NLL) 163, and linear conversion layers (LLs) 164A and 164B. The linear conversion layer 161 is configured to perform, on a vector inputted from the RNN 132, linear conversion using a weight matrix and a bias vector. The normalization layer 162 is configured to apply a normalization process such as subtractive normalization or the like to each component in a vector inputted from the linear conversion layer 161 to thereby generate a normalized vector. The nonlinear conversion layer 163 is configured to perform, on each component in the normalized vector, nonlinear conversion using an activation function such as a ramp function or the like. Further, the linear conversion layer 164A performs, on an output of the nonlinear conversion layer 163, linear conversion using a weight matrix and a bias vector to thereby generate a risk factor Dr that is a scalar quantity. The risk factor Dr is outputted to the outside via a node of the output layer 64. On the other hand, the linear conversion layer 164B performs, on the output of the nonlinear conversion layer 163, linear conversion using a weight matrix and a bias vector to thereby generate a prediction time Tp that is a scalar quantity. The prediction time Tp is outputted to the outside via a node of the output layer 64.

As explained above, since the NN structure 34 shown in Fig. 18 is able to receive and process multidimensional array data MDy comprising, as array elements, measurement parameters and relative time values assigned to the measurement parameters, the inference calculator 27 is able to calculate, based on the NN structure 34, predictive information (Dr, Tp) with high accuracy.

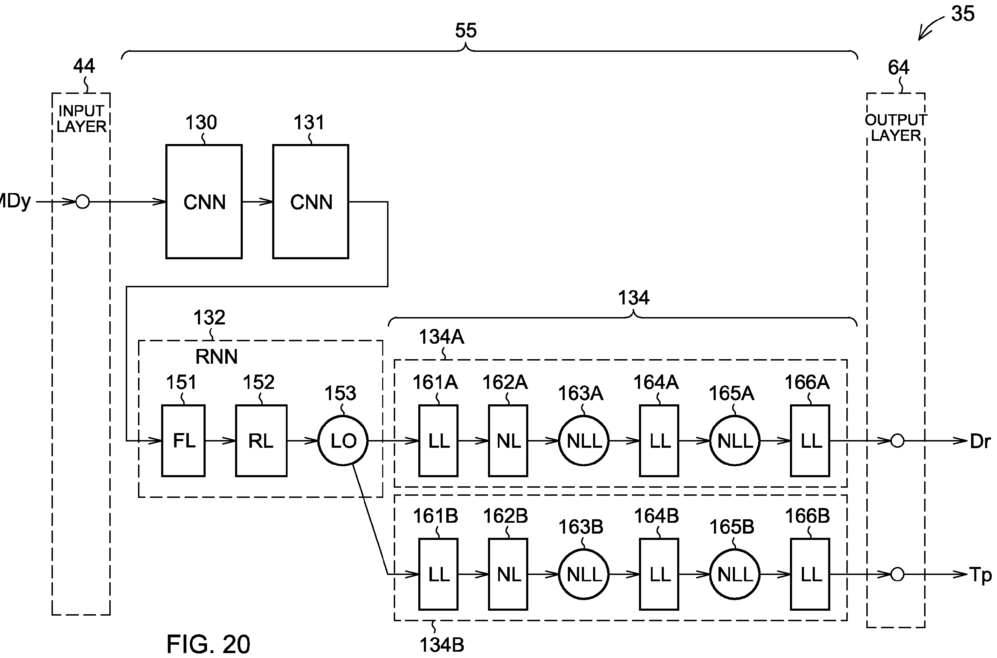

Fig. 20 is a view illustrating an NN structure 35 as an example. The NN structure 35 comprises: an input layer 44 which receives multidimensional array data MDy comprising a third-order tensor; an intermediate layer structure 55 which comprises CNNs 130 and 131 and an RNN 132 configured to process multidimensional array data MDy inputted via the input layer 44; and an output layer 64 which is configured to output predictive information (Dr, Tp) based on outputs of the intermediate layer structure 55. The intermediate layer structure 55 further comprises a feed-forward NN 134 comprising two sub-NNs 134A and 134B which are arrange in parallel to each other. Each of the sub-NNs 134A and 134B is configured to process an output vector from a last output layer 153 in the RNN 132.

As shown in Fig. 20, the sub-NN 134A comprises a linear conversion layer (LL) 161A, a normalization layer (NL) 162A, a nonlinear conversion layer (NLL) 163A, a linear conversion layer (LL) 164A, a nonlinear conversion layer (NLL) 165A, and a linear conversion layer (LL) 166A. The linear conversion layer 161A is configured to perform, on an output vector from the last output layer 153 in the RNN 132, linear conversion using a weight matrix and a bias vector. The normalization layer 162A is able to apply a normalization process such as subtractive normalization or the like to each component in a vector inputted from the linear conversion layer 161A to thereby generate a normalized vector. The nonlinear conversion layer 163A is configured to perform, on each component in the normalized vector, nonlinear conversion using an activation function such as a ramp function or the like. The linear conversion layer 164A is configured to perform, on an output of the nonlinear conversion layer 163A, linear conversion using a weight matrix and a bias vector. The nonlinear conversion layer 165A is configured to perform, on each component in a vector inputted from the linear conversion layer 164A, nonlinear conversion using an activation function such as a ramp function or the like. Further, the linear conversion layer 166A performs, on an output of the nonlinear conversion layer 165A, linear conversion using a weight matrix and a bias vector to thereby generate a risk factor Dr that is a scalar quantity. The risk factor Dr is outputted to the outside via a node of the output layer 64.

On the other hand, as shown in Fig. 20, the sub-NN 134B comprises a linear conversion layer (LL) 161B, a normalization layer (NL) 162B, a nonlinear conversion layer (NLL) 163B, a linear conversion layer (LL) 164B, a nonlinear conversion layer (NLL) 165B, and a linear conversion layer (LL) 166B. The linear conversion layer 161B is configured to perform, on an output vector from the last output layer 153 in the RNN 132, linear conversion using a weight matrix and a bias vector. The normalization layer 162B is able to apply a normalization process such as subtractive normalization or the like to each component in a vector inputted from the linear conversion layer 161B to thereby generate a normalized vector. The nonlinear conversion layer 163B is configured to perform, on each component in the normalized vector, nonlinear conversion using an activation function such as a ramp function or the like. The linear conversion layer 164B is configured to perform, on an output of the nonlinear conversion layer 163B, linear conversion using a weight matrix and a bias vector. The nonlinear conversion layer 165B is configured to perform, on each component in a vector inputted from the linear conversion layer 164B, nonlinear conversion using an activation function such as a ramp function or the like. Further, the linear conversion layer 166B performs, on an output of the nonlinear conversion layer 165B, linear conversion using a weight matrix and a bias vector to thereby generate a prediction time Tp that is a scalar quantity. The prediction time Tp is outputted to the outside via a node of the output layer 64.

As explained above, since the NN structure 35 shown in Fig. 20 is also able to receive and process multi-dimensional array data MDy comprising, as array elements, measurement parameters and relative time values assigned to the measurement parameters, the inference calculator 27 is able to calculate, based on the NN structure 35, predictive information (Dr, Tp) with high accuracy.

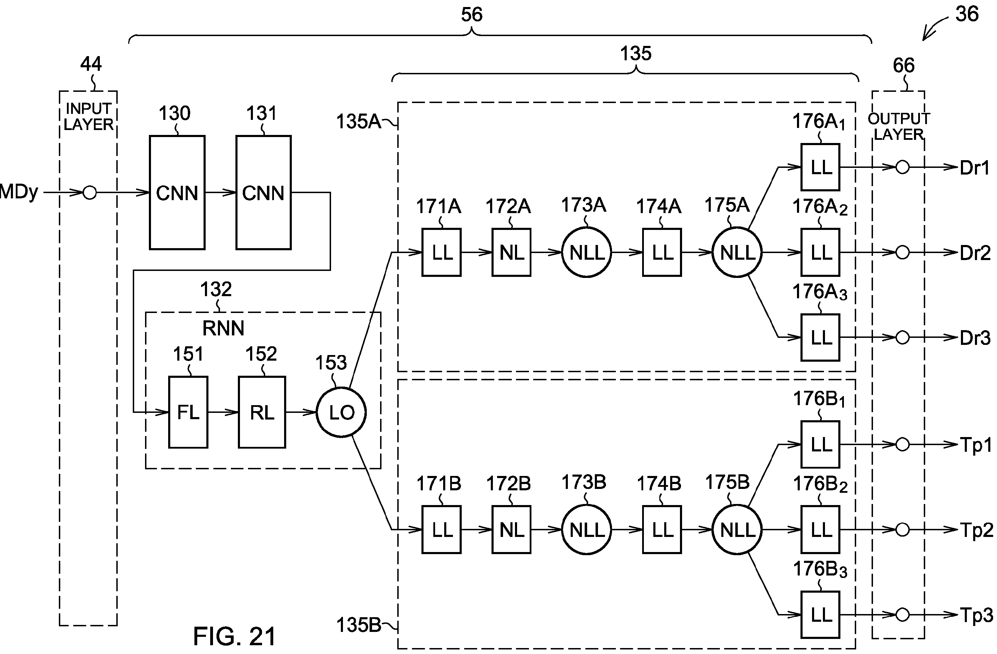

Regarding each of the above-explained NN structures 34 and 35, the NN structure is configured to be able to predict occurrences of a single kind of abnormal event, no limitation thereto intended. The configuration of each of the NN structures 34 and 35 can be modified appropriately to allow for prediction of occurrences of two or more kinds of abnormal events. Fig. 21 is a view illustrating an NN structure 36 which is a modified example of the NN structure 35. The NN structure 36 is configured to be able to predict occurrence of three kinds of abnormal events.

Referring to Fig. 21, the NN structure 36 comprises: an input layer 44 which receives multidimensional array data MDy comprising a third-order tensor; an intermediate layer structure 56 which comprises CNNs 130 and 131 and an RNN 132 configured to process multidimensional array data MDy inputted via the input layer 44; and an output layer 66 which is configured to output three kinds of predictive information (Dr1, Tp1), (Dr2, Tp2), and (Dr3, Tp3) based on outputs of the intermediate layer structure 56. The intermediate layer structure 56 further comprises a feed-forward NN 135 comprising two sub-NNs 135A and 135B which are arrange in parallel to each other. Each of the sub-NNs 135A and 135B is configured to process an output vector from a last output layer 153 in the RNN 132.

As shown in Fig. 21, the sub-NN 135A comprises a linear conversion layer (LL) 171A, a normalization layer (NL) 172A, a nonlinear conversion layer (NLL) 173A, a linear conversion layer (LL) 174A, a nonlinear conversion layer (NLL) 175A, and linear conversion layers (LLs) $176A_1$, $176A_2$, and $176A_3$ which are which are arranged in parallel to one another. Except for values of parameter sets (for example, components of a weight matrix and components of a bias vector) updated by a machine learning algorithm, the linear conversion layer 171A, the normalization layer 172A, the nonlinear conversion layer 173A, the linear conversion layer 174A, and the nonlinear conversion layer 175A have basic structures that are the same as those of the linear conversion layer 161A, the normalization layer 162A, the nonlinear conversion layer 163A, the linear conversion layer 164A, and the nonlinear conversion layer 165A shown in Fig. 20, respectively. An i-th linear conversion layer $176A_i$ in the linear conversion layers $176A_1$-$176A_3$ is able to generate a risk factor Dri that indicates the degree of an i-th abnormal event and is a scalar quantity, by performing, on an output vector from the nonlinear conversion layer 175A, linear conversion using a weight matrix and a bias vector (i is an arbitrarily selected integer in the range from 1 to 3). The risk factors Dr1, Dr2, and Dr3 are outputted to the outside via nodes of the output layer 66.

On the other hand, as shown in Fig. 21, the sub-NN 135B comprises a linear conversion layer (LL) 171B, a normalization layer (NL) 172B, a nonlinear conversion layer (NLL) 173B, a linear conversion layer (LL) 174B, a nonlinear conversion layer (NLL) 175B, and linear conversion layers (LLs) $176B_1$, $176B_2$, and $176B_3$ which are which are arranged in parallel to one another. Except for values of parameter sets (for example, components of a weight matrix and components of a bias vector) updated by a machine learning algorithm, the linear conversion layer 171B, the normalization layer 172B, the nonlinear conversion layer 173B, the linear conversion layer 174B, and the nonlinear conversion layer 175B have basic structures that are the same as those of the linear conversion layer 161B, the normalization layer 162B, the nonlinear conversion layer 163B, the linear conversion layer 164B, and the nonlinear conversion layer 165B shown in Fig. 20, respectively. Aj-th linear conversion layer $176B_j$ of the linear conversion layers $176B_1$-$176B_3$ is able to generate a prediction time Tpj at which a j-th abnormal event is likely to occur, by performing, on an output vector from the nonlinear conversion layer 175B, linear conversion using a weight matrix and a bias vector (j is an arbitrarily selected integer in the range from 1 to 3). The prediction times Tp1, Tp2, and Tp3 are outputted to the outside via nodes of the output layer 66.

In the example in Fig. 21, the number of the linear conversion layers $176A_1$- $176A_3$, which are arranged in parallel to one another to process an output of the nonlinear conversion layer 175A in the sub-NN 135A, is three, and the number of the linear conversion layers $176B_1$- $176B_3$, which are arranged in parallel to one another to process an output of the nonlinear conversion layer 175B in the sub-NN 135B, is three, no limitation there to intended. The structures of the sub-NNs 135A and 135B may appropriately be modified such that the number of the linear conversion layers which are arranged in parallel to one another to process an output of the nonlinear conversion layer 175A is four or more than four, and the number of the linear conversion layers which are arranged in parallel to one another to process an output of the nonlinear conversion layer 175B is four or more than four. This allows for construction of an NN structure which is able to predict occurrence of four or more kinds of abnormal events.

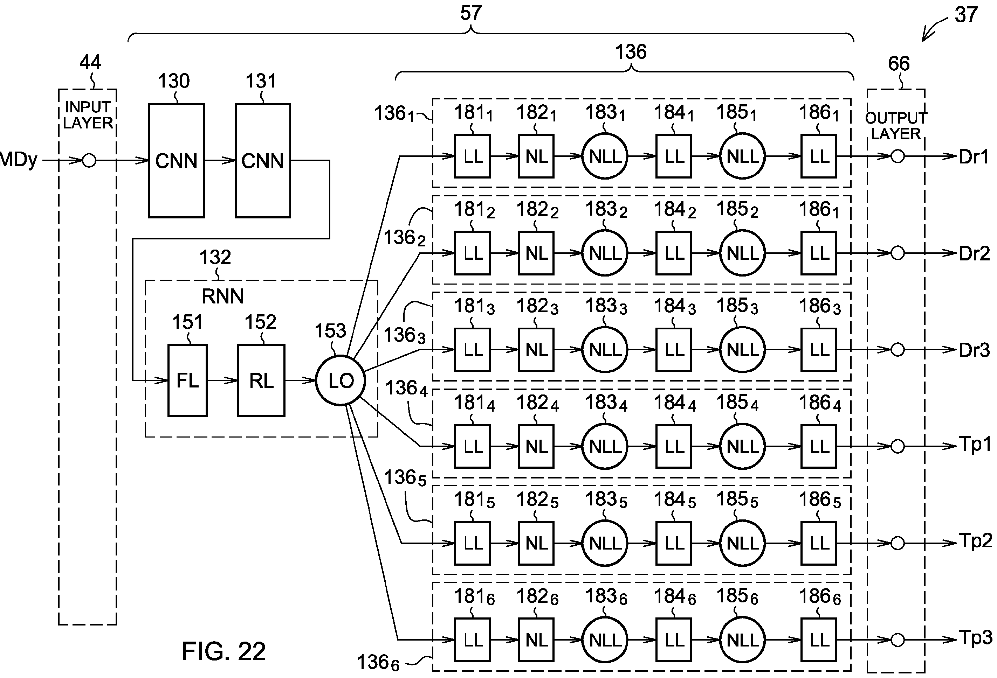

Fig. 22 is a view illustrating an NN structure 37 which is a different modified example of the NN structure 35. The NN structure 37 is configured to be able to predict occurrence of three kinds of abnormal events.

Referring to Fig. 22, the NN structure 37 comprises: an input layer 44 which receives multidimensional array data MDy comprising a third-order tensor; an intermediate layer structure 57 which comprises CNNs 130 and 131 and an RNN 132 configured to process multidimensional array data MDy inputted via the input layer 44; and an output layer 66 which is configured to output three kinds of predictive information (Dr1, Tp1), (Dr2, Tp2), and (Dr3, Tp3) based on outputs of the intermediate layer structure 57. The intermediate layer structure 57 further comprises a feed-forward NN 136 comprising six sub-NNs $136_1$, $136_2$, $136_3$, $136_4$, $136_5$, and $136_6$ which are arrange in parallel to one another. Each of the sub-NNs $136_1$-$136_6$ is configured to process an output vector from a last output layer 153 in the RNN 132.

As shown in Fig. 22, an i-th sub-NN $136_i$ in the sub-NNs $136_1$-$136_3$ comprises a linear conversion layer (LL) $181_i$, a normalization layer (NL) $182_i$, a nonlinear conversion layer (NLL) $183_i$, a linear conversion layer (LL) $184_i$, a nonlinear conversion layer (NLL) $185_i$, and a linear conversion layer (LL) $186_i$ (i is an arbitrarily selected integer in the range from 1 to 3). Except for values of parameter sets (for example, components of a weight matrix and components of a bias vector) updated by a machine learning algorithm, the linear conversion layer (LL) $181_i$, the normalization layer (NL) $182_i$, the nonlinear conversion layer (NLL) $183_i$, the linear conversion layer (LL) $184_i$, the nonlinear conversion layer (NLL) $185_i$, and the linear conversion layer (LL) $186_i$ have basic structures that are the same as those of the linear conversion layer 161A, the normalization layer 162A, the nonlinear conversion layer 163A, the linear conversion layer 164A, and the nonlinear conversion layer 165A shown in Fig. 20, respectively. The i-th linear conversion layer $186_i$ is able to generate a risk factor Dri that indicates the degree of an i-th abnormal event and is a scalar quantity, by performing, on an output vector from the nonlinear conversion layer $185_i$, linear conversion using a weight matrix and a bias vector. The risk factors Dr1, Dr2, and Dr3 are outputted to the outside via nodes of the output layer 66.

As shown in Fig. 22, a j-th sub-NN $136_j$ in the sub-NNs $136_4$-$136_6$ comprises a linear conversion layer (LL) $181_j$, a normalization layer (NL) $182_j$, a nonlinear conversion layer (NLL) $183_j$, a linear conversion layer (LL) $184_j$, a nonlinear conversion layer (NLL) $185_j$, and a linear conversion layer (LL) $186_j$ (j is an arbitrarily selected integer in the range from 4 to 6). Except for values of parameter sets (for example, components of a weight matrix and components of a bias vector) updated by a machine learning algorithm, the linear conversion layer (LL) $181_j$, the normalization layer (NL) $182_j$, the nonlinear conversion layer (NLL) $183_j$, the linear conversion layer (LL) $184_j$, the nonlinear conversion layer (NLL) $185_j$, and the linear conversion layer (LL) $186_j$ have basic structures that are the same as those of the linear conversion layer 161B, the normalization layer 162B, the nonlinear conversion layer 163B, the linear conversion layer 164B, and the nonlinear conversion layer 165B shown in Fig. 20, respectively. The j-th linear conversion layer $186_j$ is able to generate a prediction time at which a (j-3)-th abnormal event is likely to occur, by performing, on an output vector from the nonlinear conversion layer $185_j$, linear conversion using a weight matrix and a bias vector. The prediction times Tp1, Tp2, and Tp3 are outputted to the outside via nodes of the output layer 66.

In the example in Fig. 22, the number of the sub-NNs $136_1$-$136_6$, which are arranged in parallel to one another to process an output vector from the RNN 132, is six, no limitation there to intended. The structure of the feed-forward NN 136 may appropriately be modified such that the number of the sub-NNs which are arranged in parallel to one another to process an output vector from the RNN 132 is eight or more than eight. This allows for construction of an NN structure which is able to predict occurrence of four or more kinds of abnormal events.

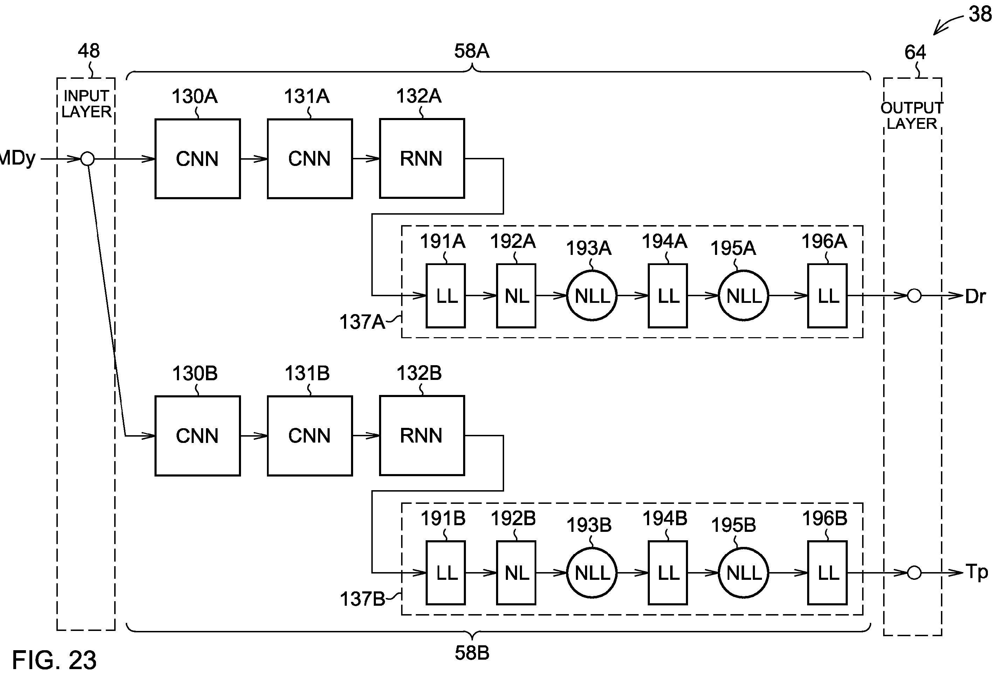

Fig. 23 is a view illustrating an NN structure 38 as an example. Referring to Fig. 23, the NN structure 38 comprises: an input layer 44 which receives multidimensional array data MDy comprising a third-order tensor; an intermediate layer structure which comprises sub-intermediate layer structures 58A and 58B which are arranged in parallel to each other; and an output layer 64 which is configured to output predictive information (Dr, Tp) based on outputs of the intermediate layer structure.

The sub-intermediate layer structure 58A comprises convolutional neural networks (CNNs) 130A and 131A, a recurrent neural network (RNN) 132A, and a feed-forward NN 137A. Except for values of parameter sets (for example, components of a weight matrix and components of a bias vector) updated by a machine learning algorithm, the CNNs 130A and 131A and the RNN 132A have basic structures that are the same as those of CNNs 130 and 131 and the 132 shown in Fig. 18, respectively. Further, as shown in Fig. 23, the feed-forward NN 137A comprises a linear conversion layer (LL) 191A, a normalization layer (NL) 192A, a nonlinear conversion layer (NLL) 193A, a linear conversion layer (LL) 194A, a nonlinear conversion layer (NLL) 195A, and a linear conversion layer (LL) 196A. Except for values of parameter sets (for example, components of a weight matrix and components of a bias vector) updated by a machine learning algorithm, the linear conversion layer 191A, the normalization layer 192A, the nonlinear conversion layer 193A, the linear conversion layer 194A, the nonlinear conversion layer 195A, and the linear conversion layer 196A have basic structures that are the same as those of the linear conversion layer 161A, the normalization layer 162A, the nonlinear conversion layer 163A, the linear conversion layer 164A, the nonlinear conversion layer 165A, and the linear conversion layer 166A shown in Fig. 20, respectively.

The linear conversion layer 196A is able to generate a risk factor Dr that indicates the degree of an abnormal event and is a scalar quantity, by performing, on an output vector from the nonlinear conversion layer 195A, linear conversion using a weight matrix and a bias vector. The risk factor Dr is outputted to the outside via a node of the output layer 64.

On the other hand, the sub-intermediate layer structure 58B comprises convolutional neural networks (CNNs) 130B and 131B, a recurrent neural network (RNN) 132B, and a feed-forward NN 137B. Except for values of parameter sets (for example, components of a weight matrix and components of a bias vector) updated by a machine learning algorithm, the CNNs 130B and 131B and the RNN 132B have basic structures that are the same as those of CNNs 130 and 131 and the 132 shown in Fig. 18, respectively. Further, as shown in Fig. 23, the feed-forward NN 137B comprises a linear conversion layer (LL) 191B, a normalization layer (NL) 192B, a nonlinear conversion layer (NLL) 193B, a linear conversion layer (LL) 194B, a nonlinear conversion layer (NLL) 195B, and a linear conversion layer 196B. Except for values of parameter sets (for example, components of a weight matrix and components of a bias vector) updated by a machine learning algorithm, the linear conversion layer 191B, the normalization layer 192B, the nonlinear conversion layer 193B, the linear conversion layer 194B, the nonlinear conversion layer 195B, and the linear conversion layer 196B have basic structures that are the same as those of the linear conversion layer 161B, the normalization layer 162B, the nonlinear conversion layer 163B, the linear conversion layer 164B, the nonlinear conversion layer 165B, and the linear conversion layer 166B shown in Fig. 20, respectively.

The linear conversion layer 196B is able to generate a prediction time Tp at which an abnormal event is likely to occur, by performing, on an output vector from the nonlinear conversion layer 195B, linear conversion using a weight matrix and a bias vector. The prediction time Tp is outputted to the outside via a node of the output layer 64.

As explained above, each of the NN structures 34, 35, 36, 37, and 38 shown in Figs. Figs. 18 and 20-23 is configured to receive multidimensional array data MDy only. Alternatively, the configuration of the NN structure may be modified to receive both multidimensional array data MDy and attribute information of an observed object Tgt. Specifically, a modified example of the NN structure can be attained by incorporating, in each of the NN structures 34, 35, 36, 37, and 38, a connecting layer which is configured to connect attribute information inputted via the input layer and an output of the RNN (recurrent neural network) with each other.

For example, as the attribute information of the observed object Tgt, a scalar quantity or a vector quantity that comprises intrinsic information of a living body such as a human or the like can be used. More specifically, for example, numerical values representing an age, a gender, a body mass index (BMI), and presence/absence of a specific disease such as diabetes or the like may be used as the attribute information. In such a case, the data reconstructor 25 or the inference calculator 27 shown in Fig. 1 may be configured to have an internal memory (which is not shown in the figure) in which the attribute information has been stored in advance, and the attribute information read out of the internal memory may be supplied to the NN structure. Alternatively, the data reconstructor 25 or the inference calculator 27 may be configured to obtain the attribute information from an external information source (which is not shown in the figure), and supply the obtained attribute information to the NN structure.

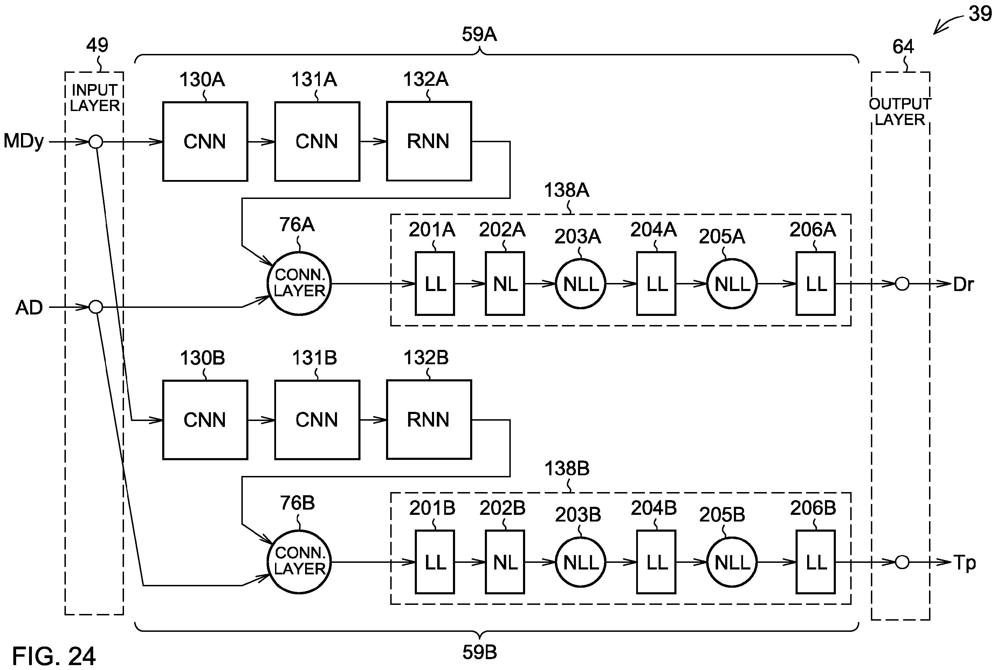

Fig. 24 is a view illustrating an NN structure 39 which is a modified example of the NN structure 38 shown in Fig. 23. Referring to Fig. 23, the NN structure 39 comprises: an input layer 49 which receives multidimensional array data MDy comprising a third-order tensor and attribute information AD of an observed object Tgt; an intermediate layer structure which comprises sub-intermediate layer structures 59A and 59B; and an output layer 64 which is configured to output predictive information (Dr, Tp) based on outputs of the intermediate layer structure.

The sub-intermediate layer structure 59A comprises CNNs 130A and 131A, an RNN 132A, a connecting layer 76A, and a feed-forward NN 138A. The connecting layer 76A is able to generate a connected vector by connecting an output vector from the RNN 132A and a scalar value or a vector value of attribute information AD inputted via the input layer 49 with each other. For example, the connecting layer 76A may be configured to generate a fifty-dimensional connected vector by connecting a forty-dimensional vector inputted from the RNN 132A and a ten-dimensional vector of attribute information AD with each other.

The feed-forward NN 138A is configured to process a connected vector inputted from the connecting layer 76A, and has a basic structure that is the same as that of the feed-forward NN 137A shown in Fig. 23. As shown in Fig. 24, the feed-forward NN 138A comprises a linear conversion layer (LL) 201A, a normalization layer (NL) 202A, a nonlinear conversion layer (NLL) 203A, a linear conversion layer (LL) 204A, a nonlinear conversion layer (NLL) 205A, and a linear conversion layer (LL) 206A. The linear conversion layer 201A, the normalization layer 202A, the nonlinear conversion layer 203A, the linear conversion layer 204A, the nonlinear conversion layer 205A, and the linear conversion layer 206A have basic structures that are the same as those of the linear conversion layer 191A, the normalization layer 192A, the nonlinear conversion layer 193A, the linear conversion layer 194A, the nonlinear conversion layer 195A, and the linear conversion layer 196A in the feed-forward NN 137A shown in Fig. 23, respectively. The linear conversion layer 206A generates a risk factor Dr that is a scalar quantity, by performing, on an output of the nonlinear conversion layer 205A, linear conversion using a weight matrix and a bias vector. The risk factor Dr is outputted to the outside via a node of the output layer 64.

On the other hand, the sub-intermediate layer structure 59B comprises CNNs 130B and 131B, an RNN 132B, a connecting layer 76B, and a feed-forward NN 138B. The connecting layer 76B is able to generate a connected vector by connecting an output vector from the RNN 132B and a scalar value or a vector value of attribute information AD inputted via the input layer 49 with each other. For example, the connecting layer 76B may be configured to generate a fifty-dimensional connected vector by connecting a forty-dimensional vector inputted from the RNN 132B and a ten-dimensional vector of attribute information AD with each other.

The feed-forward NN 138B is configured to process a connected vector inputted from the connecting layer 76B, and has a basic structure that is the same as that of the feed-forward NN 137B shown in Fig. 23. As shown in Fig. 24, the feed-forward NN 138B comprises a linear conversion layer (LL) 201B, a normalization layer (NL) 202B, a nonlinear conversion layer (NLL) 203B, a linear conversion layer (LL) 204B, a nonlinear conversion layer (NLL) 205B, and a linear conversion layer (LL) 206B. The linear conversion layer 201B, the normalization layer 202B, the nonlinear conversion layer 203B, the linear conversion layer 204B, the nonlinear conversion layer 205B, and the linear conversion layer 206B have basic structures that are the same as those of the linear conversion layer 191B, the normalization layer 192B, the nonlinear conversion layer 193B, the linear conversion layer 194B, the nonlinear conversion layer 195B, and the linear conversion layer 196B in the feed-forward NN 138B shown in Fig. 23, respectively. The linear conversion layer 206B generates a prediction time Tp that is a scalar quantity, by performing, on an output of the nonlinear conversion layer 205B, linear conversion using a weight matrix and a bias vector. The prediction time Tp is outputted to the outside via a node of the output layer 64.

As explained above, since the NN structure 39 shown in Fig. 24 is able to receive and process attribute information AD of an observed object Tgt in addition to multidimensional array data MDy that comprises, as array elements, measurement parameters and relative time values assigned to the measurement parameters, the inference calculator 27 is able to calculate, based on the NN structure 39, predictive information (Dr, Tp) relating to the observed object Tgt with high accuracy.

In each of the examples in Figs. 22 and 23, the number of the sub-intermediate layer structures, which are arranged in parallel to each other to process the multi-dimensional array data in a parallel manner, is two, no limitation thereto intended. The configuration of each of the NN structures 38 and 39 may appropriately be modified such that the number of the sub-intermediate layer structures, which are arranged in parallel to one another to process the multi-dimensional array data in a parallel manner, is four or more than four. This allows for construction of an NN structure which is able to predict occurrences of two or more kinds of abnormal events.

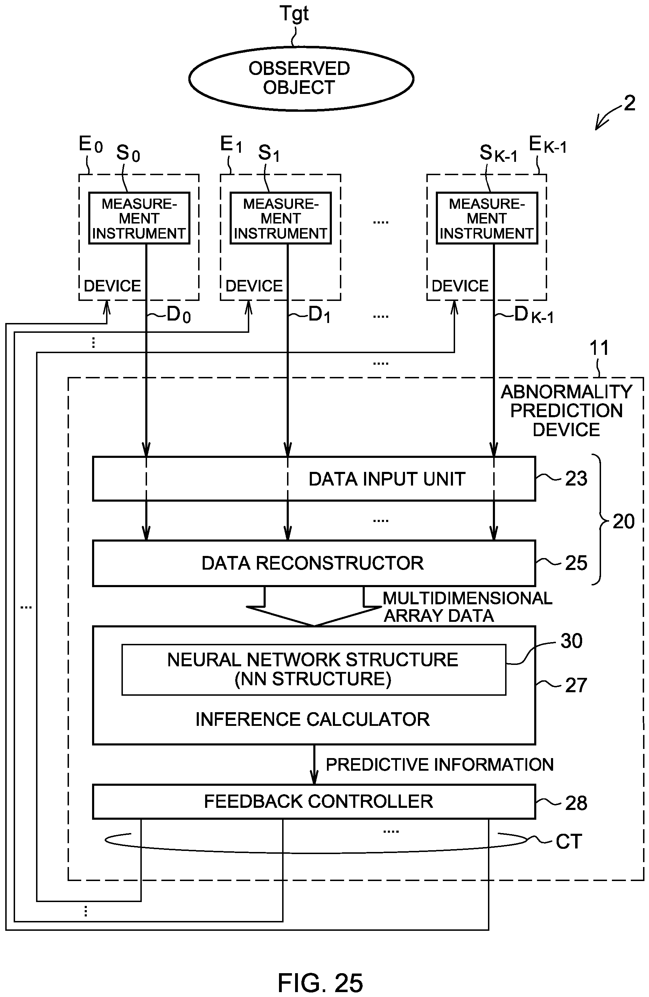

Next, a feedback control system using the above-explained predictive information will be explained. Fig. 25 is a block diagram schematically showing a configuration of a system 2 for abnormality prediction, which is an embodiment according to the present disclosure.

As shown in Fig. 25, the system 2 for abnormality prediction comprises: a plurality of devices $E_0$, ..., $E_{K-1}$, each performing observation or processing with respect to an observed object Tgt; and an abnormality prediction device 11 which is configured to predict occurrence of at least one abnormal event, based on multiple data time series $D_0$, ..., $D_{K-1}$ supplied from the devices $E_0$, ..., $E_{K-1}$, respectively. In the present case, K is a positive integer that represents the number of the devices $E_0$, ..., $E_{K-1}$, and is 3 or greater than 3. The devices $E_0$, ..., $E_{K-1}$ comprise measurement instruments $S_0$, ..., $S_{K-1}$, respectively. The function of each measurement instruments $S_k$ shown in Fig. 25 is the same as that of the measurement instrument $S_k$ shown in Fig. 1. In this regard, the number of the devices $E_0$, ..., $E_{K-1}$ is not limited to 3 or greater than 3, and the configuration of the system 2 for abnormality prediction may be modified appropriately to include two devices.

Similar to the case of the abnormality prediction device 10 shown in Fig. 1, the abnormality prediction device 11 comprises: a data reconstruction system 20 which is configured to reconstruct multidimensional array data by using the data time series $D_0$, ..., $D_{K-1}$ supplied from the devices $E_0$, ..., $E_{K-1}$, respectively; and an inference calculator 27 which is configured to calculate predictive information on an abnormal event, by performing calculations based on an NN structure 30 using the multidimensional array data as an input thereto. The abnormality prediction device 11 further comprises a feedback controller 28 which is configured to perform loop control for changing an operation condition of the devices $E_0$, ..., $E_{K-1}$ according to predictive information calculated in the inference calculator 27.

The feedback controller 28 generates, according to the predictive information, control information CT for adaptively changing operation conditions of the devices $E_0$, ..., $E_{K-1}$, and supplies the control information CT to the devices $E_0$, ..., $E_{K-1}$. The devices $E_0$, ..., $E_{K-1}$ are configured to perform operations according to control information CT. For example, when a combination of a risk factor Dr and a prediction time Tp meets a predetermined condition (for example, an event where the risk factor Dr has exceeded a predetermined threshold value), the feedback controller 28 may be triggered and generate control information CT. This allows for prevention of actual occurrences of abnormal events.

The above loop control is effective in the case where the strength of operation of the devices $E_0$, ..., $E_{K-1}$ is dependent on a measurement parameter that is used for adjusting strength of specific operation. For example, this is the case for speed-related parameters such as such as liquid delivery concentration, operating temperature, and so on. For this loop control to function effectively, it is desirable that prediction of the occurrence of an abnormal event be made in an early stage (for example, the difference in time between a prediction time Tp and the time at which the prediction time Tp is generated is 20 minutes or more than 20 minutes). Specifically, a grace period of time is needed for changes made by the control system to the devices $E_0$, ..., $E_{K-1}$ to be reflected in monitoring.

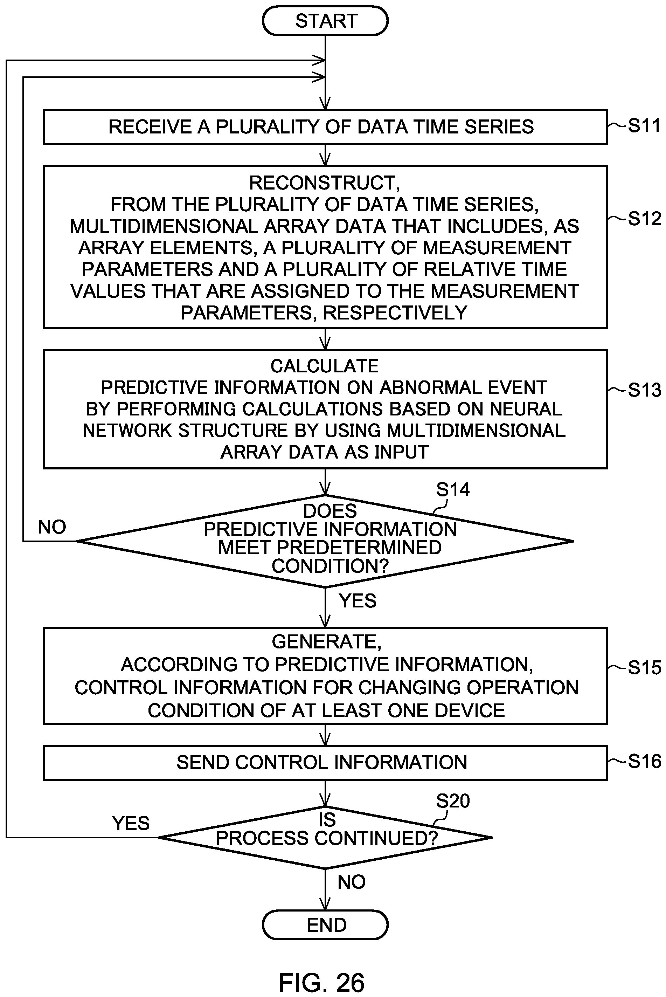

Next, with reference to Fig. 26, a processing procedure performed by the above-explained abnormality prediction device 11 will be explained in the following description. Fig. 26 is a flowchart schematically illustrating an example of a processing procedure in loop control. Steps S11-S13 shown in Fig. 26 are the same as steps S11-S13 shown in Fig. 6.

After step S13, the feedback controller 28 makes a judgment as to whether generated predictive information (Dr, Tp) meets a predetermined condition (step S14). For example, it is possible to make, according to a judgment as to whether a risk factor Dr for an abnormal event where the operating temperature of a device $E_k$ exceeds an allowable range, a judgment as to whether predictive information meets a predetermined condition. In the case where the predictive information does not meet the predetermined condition (NO in step S14), the feedback controller 28 makes the process return to step S11.

On the other hand, in the case where the predictive information meets the predetermined condition (YES in step S14), the feedback controller 28 generates, according to the predictive information, control information CT for changing an operation condition of at least one device in the devices $E_0$, ..., $E_{K-1}$ (step S15), and sends the control information CT (step S16). Thereafter, the feedback controller 28 makes the process return to step S11, if it has determined to continue the process (YES in step S20). Finally, if the feedback controller 28 has determined to discontinue the process (NO in step S20), it terminates the process.

As explained above, the system 3 for abnormality prediction comprises the data reconstruction system 20, the inference calculator 27, and the feedback controller 28; and, accordingly, the system can prevent occurrence of an abnormal event, and can make the devices $E_0$, ..., $E_{K-1}$ operate safely.

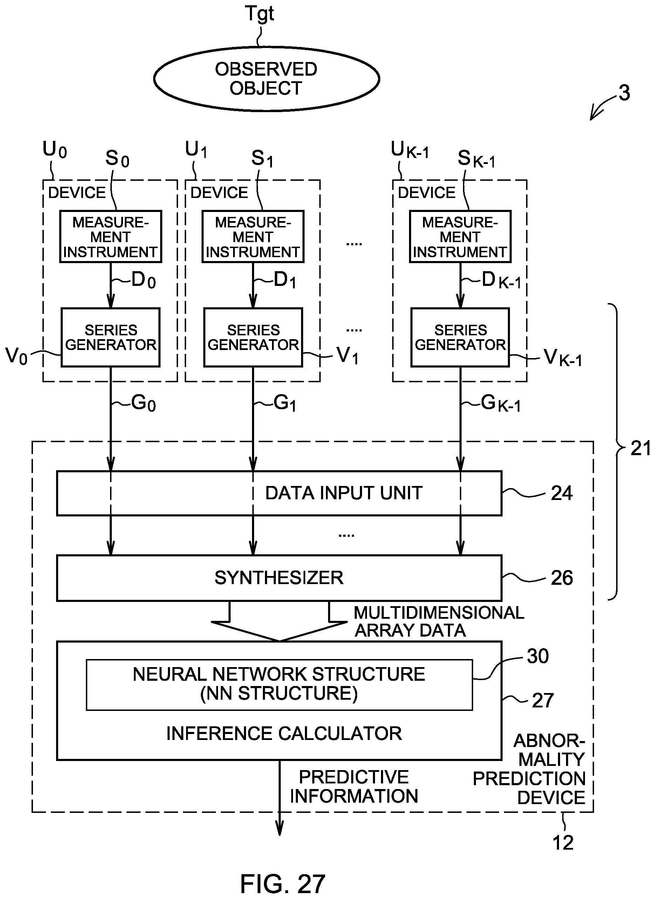

Next, a system for abnormality prediction in a different embodiment will be explained. In each of the above-explained systems 1 and 2, the data reconstructor 25 in each of the abnormality prediction devices 10 and 11 has a function to assign relative time values $\tau$ to respective measurement parameters. Alternatively, there may be an embodiment wherein a device has the function to assign relative time values $\tau$ to respective measurement parameters. Fig. 27 is a block diagram schematically showing a configuration of a system 3 for abnormality prediction, which is one of such embodiments.

As shown in Fig. 27, the system 3 for abnormality prediction comprises: a plurality of devices $U_0$, ..., $U_{K-1}$, each performing observation or processing with respect to an observed object Tgt; and an abnormality prediction device 12 which is configured to predict occurrence of at least one abnormal event, based on multiple vector series $G_0$, ..., $G_{K-1}$ supplied from the devices $U_0$, ..., $U_{K-1}$, respectively. In the present case, K is a positive integer that represents the number of the devices $U_0$, ..., $U_{K-1}$, and is 3 or greater than 3. The devices $U_0$, ..., $U_{K-1}$ may be medical devices, manufacturing devices, or monitoring devices, for example. In this regard, the number of the devices $U_0$, ..., $U_{K-1}$ is not limited to 3 or greater than 3, and the configuration of the system 3 for abnormality prediction may be modified appropriately to include two devices.

The devices $U_0$, ..., $U_{K-1}$ comprise measurement instruments $S_0$, ..., $S_{K-1}$, respectively. The function of each measurement instruments $S_k$ shown in Fig. 27 is the same as that of the measurement instruments $S_k$ shown in Fig. 1. Each measurement instruments $S_k$ is configured to physically (for example, optically, electrically, or acoustically) measure the state of a device $U_k$ which includes the measurement instrument $S_k$ or the state of an observed object Tgt, and output a data time series $D_K$ that comprises a time series of measured quantities $D_k(t)$ obtained as a result of measurement.

Further, the devices $U_0$, ..., $U_{K-1}$ comprise series generators $V_0$, ..., $V_{K-1}$, respectively. The series generators $V_0$, ..., $V_{K-1}$ are configured to generate, in parallel, vector series $G_0$, ..., $G_{K-1}$ from data time series $D_0$, ..., $D_{K-1}$, inputted from the measurement instruments $S_0$, ..., $S_{K-1}$, respectively. A single vector series $G_k$ is a series comprising multiple vectors, each comprising, as vector components, at least one measurement parameter and a relative time value $\tau$ assigned thereto. The series generators $V_0$, ..., $V_{K-1}$ have functions for assigning, by using timers (which are not shown in the figure)

in the devices $U_0$, ..., $U_{K-1}$, relative time values $\tau$, that are based on a shared time reference, to measurement parameters. Specifically, the vector series $G_0$, ..., $G_{K-1}$ generated in the series generators $V_0$, ..., $V_{K-1}$ may be the vector series $G_0$, ..., $G_{K-1}$ shown in Fig. 7 or Fig. 8. In this regard, the series lengths of the vector series $G_0$, ..., $G_{K-1}$ in each of the examples in Fig. 7 and Fig. 8 have the same values (=N), no limitation thereto intended. If i and j are set to arbitrarily selected integers that are in the range of 1-K and are different from each other (i≠j), the series length of a vector series $G_i$ generated in an i-th series generators $V_i$ and the series length of a vector series $G_j$ generated in a j-th series generators $V_j$ may be different from each other.

The abnormality prediction device 12 is connected to the devices $U_0$, ..., $U_{K-1}$ via a wired transmission path such as a transmission cable or the like or a wireless transmission path. The devices $U_0$, ..., $U_{K-1}$ have functions for transmitting, to the abnormality prediction device 12 via the wired transmission path or the wireless transmission path, the vector series $G_0$, ..., $G_{K-1}$ obtained from the series generators $V_0$, ..., $V_{K-1}$, respectively; and the abnormality prediction device 12 has a function to receive the vector series $G_0$, ..., $G_{K-1}$ from the devices $U_0$, ..., $U_{K-1}$.

As shown in Fig. 27, abnormality prediction device 12 comprises: a data input unit 24 which receives and temporarily stores the vector series $G_0$, ..., $G_{K-1}$ supplied from the devices $U_0$, ..., $U_{K-1}$, respectively; a synthesizer 26 which is configured to synthesize the vector series $G_0$, ..., $G_{K-1}$ inputted via the data input unit 24 to thereby generate multidimensional array data to be inputted to an input layer of an NN structure 30; and an inference calculator 27 which is configured to calculate predictive information on an abnormal event, by performing calculations based on the NN structure 30 using the multidimensional array data as an input thereto. The NN structure 30 shown in Fig. 27 may have a configuration that is the same as the configuration of any one of the NN structures 31-33 and 31B shown in Figs. 9-11 and 16. Accordingly, even if inconsistency occurs between the vector series $G_0$, ..., $G_{K-1}$ (for example, even if inconsistency in terms of dimensions, such as that shown in Fig. 8, occurs), the NN structure 30 is able to compensate for the inconsistency, and, consequently, the inference calculator 27 is able to perform reliable calculations based on the NN structure 30.

As shown in Fig. 27, in the system 3 for abnormality prediction, a data reconstruction system 21 is formed by a combination of the series generators $V_0$, ..., $V_{K-1}$, the data input unit 24, and the synthesizer 26.

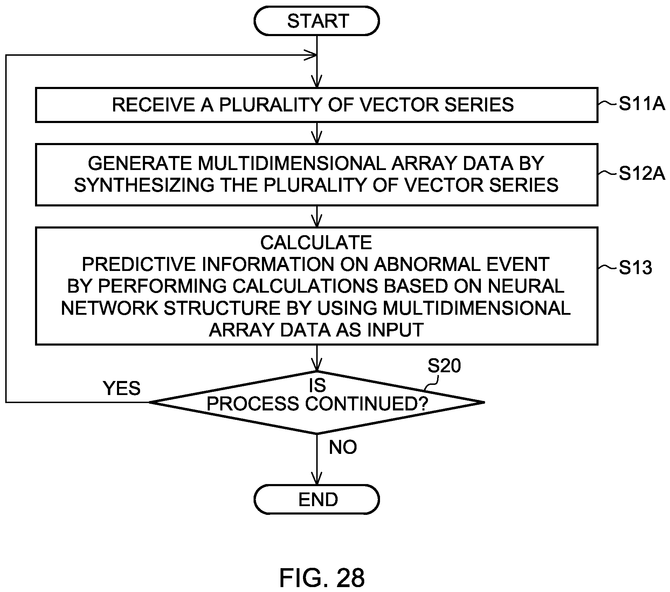

Next, with reference to Fig. 28, a processing procedure performed by the above-explained abnormality prediction device 12 will be explained in the following description. Fig. 28 is a flowchart schematically showing an example of a processing procedure for predicting occurrences of abnormal events.

Referring to Fig. 28, the synthesizer 26 reads vector series $G_0$, ..., $G_{K-1}$ out of data sets temporarily stored in the data input unit 24 (step S11A), and generates, by synthesizing the vector series $G_0$, ..., $G_{K-1}$, multidimensional array data to be inputted to the inference calculator 27 (i.e., the input layer of the NN structure 30) (step S12A).

Next, the inference calculator 27 calculates predictive information relating to an abnormal event, by performing calculations that uses multi-dimensional array data as an input and is based on the neural network structure 30 (step S13).

Thereafter, the inference calculator 27 makes the process return to step S11A, if it has determined to continue the process (YES in step S20). At that time, the synthesizer 26 reads new vector series $G_0$, ..., $G_{K-1}$ out of the data sets temporarily stored in the data input unit 24 (step S11A), and generates multidimensional array data from the new vector series $G_0$, ..., $G_{K-1}$ (step S12A). Next, the inference calculator 27 calculates predictive information relating to the abnormal event, by performing calculations that uses the multi-dimensional array data as an input and is based on the neural network structure 30 (step S13). In the manner explained above, the abnormality prediction device 12 is able to predict, sequentially and in real time, occurrence of the abnormal event. Finally, the inference calculator 27 terminates the process if it has determined that the process is not to be continued (NO in step S20).

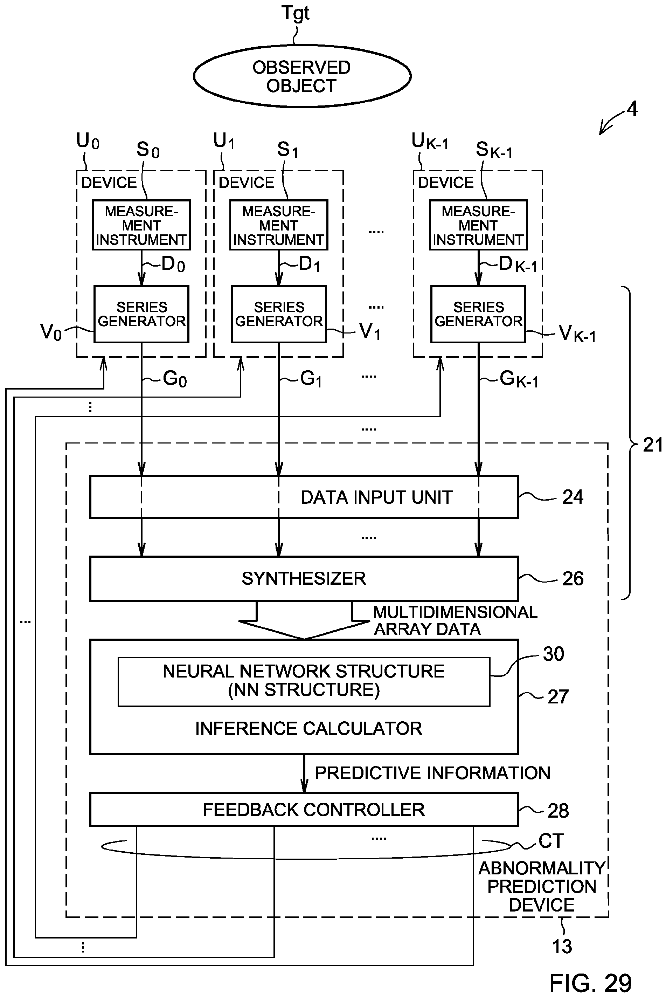

Next, a feedback control system, which is a modification example of the above-explained system 3 for abnormality prediction, will be explained. Fig. 29 is a block diagram schematically showing a configuration of a system 4 for abnormality prediction, which is an embodiment according to the present disclosure.

As shown in Fig. 29, the system 4 for abnormality prediction comprises: a plurality of devices $U_0$, ..., $U_{K-1}$, each performing observation or processing with respect to an observed object Tgt; and an abnormality prediction device 13 which is configured to predict occurrence of at least one abnormal event, based on multiple vector series $G_0$, ..., $G_{K-1}$ supplied from the devices $U_0$, ..., $U_{K-1}$, respectively. In this regard, the number of the devices $U_0$, ..., $U_{K-1}$ is not limited to 3 or greater than 3, and the configuration of the system 4 for abnormality prediction may be modified appropriately to include two devices.

Similar to the abnormality prediction device 12 shown in Fig. 27, the abnormality prediction device 13 comprises a data input unit 24, a synthesizer 26, and an inference calculator 27. A data reconstruction system 21 is formed by the data input unit 24, the synthesizer 26, and the series generators $V_0$, ..., $V_{K-1}$. The abnormality prediction device 13 further comprises a feedback controller 28 which is configured to perform loop control for changing an operation condition of the devices $U_0$, ..., $U_{K-1}$ according to predictive information calculated in the inference calculator 27.

The feedback controller 28 generates, according to the predictive information, control information CT for adaptively changing an operation condition of the devices $U_0$, ..., $U_{K-1}$, and supplies the control information CT to the devices $U_0$, ..., $U_{K-1}$. The devices $U_0$, ..., $U_{K-1}$ are configured to perform operation according to control information CT. For example, when a combination of a risk factor Dr and a prediction time Tp meets a predetermined condition (for example, an event that the risk factor Dr has exceeded a predetermined threshold value), the feedback controller 28 may be triggered and generate control information CT. This allows for prevention of actual occurrences of abnormal events.

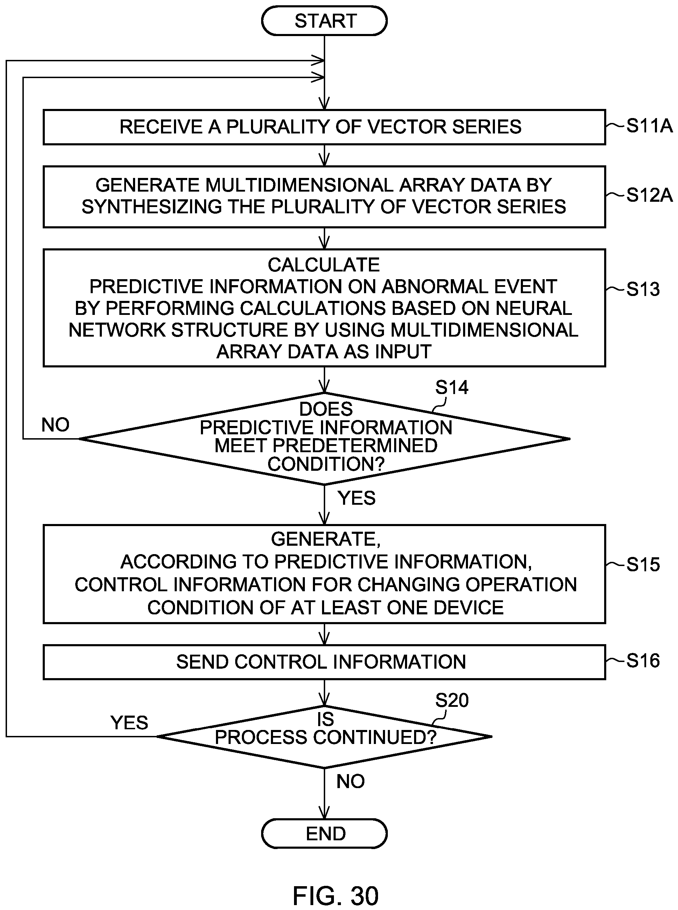

Next, with reference to Fig. 30, a processing procedure performed by the above-explained abnormality prediction device 13 will be explained in the following description. Fig. 30 is a flowchart schematically illustrating an example of a processing procedure in loop control. Steps S11A-S13A shown in Fig. 30 are the same as steps S11A-S13A shown in Fig. 28, and Steps S14-S20 shown in Fig. 30 are the same as steps S14-S20 shown in Fig. 26.

After step S13, the feedback controller 28 makes a judgment as to whether generated predictive information (Dr, Tp) meets a predetermined condition (step S14). In the case where the predictive information does not meet the predetermined condition (NO in step S14), the feedback controller 28 makes the process return to step S11A. On the other hand, in the case where the predictive information meets the predetermined condition (YES in step S14), the feedback controller 28 generates, according to the predictive information, control information CT for changing an operation condition of at least one device in the devices $U_0$, ..., $U_{K-1}$ (step S15), and sends the control information CT (step S16). Thereafter, the feedback controller 28 makes the process return to step S11A, if it has determined to continue the process (YES in step S20). Finally, if the feedback controller 28 has determined to discontinue the process (NO in step S20), it terminates the process.

As explained above, the system 4 for abnormality prediction comprises the data reconstruction system 21, the inference calculator 27, and the feedback controller 28; and, accordingly, the system can prevent occurrence of an abnormal event, and can make the devices $U_0$, ..., $U_{K-1}$ operate safely.

Similar to the case of the abnormality prediction device 10 shown in Fig. 1, all or part of components of each abnormality prediction device of the above abnormality prediction devices 11-13 may be implemented by using a single computer comprising one or more processors, or a plurality of computers which are connected with one another via a communication path. All or part of the components of each abnormality prediction device may be implemented by using one or more processors that include one or more processing units, each performing a process in accordance with codes (a group of instructions) of a software and/or firmware read out of a nonvolatile memory (a computer-readable storage medium). Alternatively, all or part of the components of each abnormality prediction device may be implemented by using one or more processors that include a semiconductor integrated circuit such as a FPGA or the like. Alternatively, all or part of the components of each abnormality prediction device may be implemented by using one or more processors that include a combination of the semiconductor integrated circuit such as a FPGA or the like and the processing unit such as a CPU, a GPU, or the like.

Although various kinds of embodiments according to the present disclosure have been explained in the above description, the above embodiments are examples, and various kinds of aspects other than the above embodiments may be implemented. For example, the number of CNNs (convolutional neural networks) that are connected in series in each intermediate layer structure or each sub-intermediate layer structure of each of the examples in Figs. 18 and 20-24 is two, no limitation thereto intended. Each intermediate layer structure or each sub-intermediate layer structure may appropriately be modified such that the number of CNNs is 1, or 3 or more than 3.

Further, the multidimensional array data MDy that can be processed in each of the NN structures 34-39 shown in Figs. 18 and 20-24 is not limited to the multidimensional array data MD3 shown in Figs. 17A and 17B.

Further, although each of the systems 1 and 2 for abnormality prediction shown in Figs. 1 and 25 is configured to include devices $E_0$, ..., $E_{K-1}$ as explained above.

Alternatively, the configuration of each of the systems 1 and 2 for abnormality prediction may be modified appropriately such that the devices $E_0$, ..., $E_{K-1}$ are placed outside each of the systems 1 and 2 for abnormality prediction (in other words, each of the systems 1 and 2 for abnormality prediction uses outputs of the devices $E_0$, ..., $E_{K-1}$ while not including the devices $E_0$, ..., $E_{K-1}$).

It should be understood that it is possible to modify the above embodiments, add components to the above embodiments, and improve the above embodiments in an appropriate manner, without departing from the gist and the scope of the present invention. The scope of the present invention should be interpreted based on the descriptions in the claims, and should be understood that it includes equivalents of the matters described in the claims.

INDUSTRIAL APPLICABILITY

Each of the device, method, and computer program for abnormality prediction according to the present disclosure allows for accurate prediction of occurrences of abnormal events, and, accordingly, it can be used suitably for prediction of occurrences of defective products in industrial production, prediction of occurrences of failures in operation of devices, prediction of occurrences of failures in devices in medical monitoring, and prediction of occurrences of adverse events in a living body in medical monitoring, for example.

REFERENCE SIGNS LIST

1 - 4: System for abnormality prediction; 10 - 13: Abnormality prediction device; 20, 21: Data reconstruction system; 23, 24: Data input unit; 25: Data reconstructor; 26: Synthesizer; 27: Inference calculator; 28: Feedback controller; 30 - 39: Neural network structure (NN structure); 40 - 42, 44, 48, 49: Input layer; 50 - 57: Intermediate layer structure; 58A, 58B, 59A, 59B: Sub-intermediate layer structure; 60 - 64, 66: Output layer; $70_0$ - $70_{K-1}$: Recurrent neural network (RNN); 81, 81B, 81C, 82, 83: Feed-forward neural network (Feed-forward NN); 90, 90A, 90B, 90C, 100, 100A, 100B, 100C: Sub-neural network (Sub-NN); 130, 130A, 130B, 131, 131A, 131B: Convolutional neural network (CNN); 132, 132A, 132B: Recurrent neural network (RNN); 133, 134, 135, 136, 137A, 137B, 138A, 138B: Feed-forward neural network (Feed-forward NN); 134A, 134B, 135A, 135B, $136_1$-$136_6$: Sub-neural network (Sub-NN); 300: Information processing apparatus; 301: Processor; 302: RAM (Random Access Memory); 303: Nonvolatile memory; 304: High-capacity storage; 305: Input/output interface; and 306: Signal path.

**Claims**

1. A system for abnormality prediction for predicting at least one abnormal event from a plurality of data time series obtained from a plurality of measurement instruments, the system comprising:

   a data reconstruction system configured to reconstruct, from the plurality of data time series, multidimensional array data that comprises, as array elements, a plurality of measurement parameters and a plurality of relative time values that are assigned to the measurement parameters, respectively; and
   an inference calculator configured to calculate predictive information on the abnormal event, by performing calculation based on a neural network structure which comprises an input layer for receiving the multidimensional array data, an intermediate layer structure comprising one or more recurrent neural networks, and an output layer.

2. The system for abnormality prediction as recited in Claim 1, wherein the predictive information is information that represents a combination of a risk factor indicating a degree of the abnormal event, and a prediction time at which the abnormal event is likely to occur.

3. The system for abnormality prediction as recited in Claim 1, wherein the data reconstruction system comprises:

   a data input unit for receiving the plurality of data time series supplied from the plurality of measurement instruments, respectively; and
   a data reconstructor configured to reconstruct the multidimensional array data from the plurality of data time series inputted via the data input unit.

4. The system for abnormality prediction as recited in Claim 3, wherein:

   the data reconstructor is configured to generate, from the plurality of data time series, a plurality of vector series as the multidimensional array data;
   each of the plurality of vector series has a dimension for specifying each of the plurality of measurement parameters and a dimension for specifying each of the plurality of relative time values; and
   the recurrent neural networks are configured to process in parallel the plurality of vector series inputted via the input layer, respectively.

5. The system for abnormality prediction as recited in Claim 1, wherein the data reconstruction system comprises:

   a plurality of series generators configured to generate a plurality of vector series from the plurality of data time series, respectively;
   a data input unit for receiving the plurality of vector series supplied from the plurality of series generators, respectively; and
   a synthesizer configured to generate the multidimensional array data to be inputted into the input layer, by synthesizing the plurality of vector series inputted via the data input unit,
   wherein each series generator of the plurality of series generators is configured to generate a vector series that includes a plurality of vectors, each vector having, as vector components, at least one measurement parameter and a relative time value that is assigned to the at least one measurement parameter, and

wherein the recurrent neural networks are configured to process in parallel the plurality of vector series inputted via the input layer, respectively.

6. The system for abnormality prediction as recited in Claim 4 or 5, wherein the intermediate layer structure comprises:

a connecting layer configured to connect outputs of the recurrent neural networks; and
a feed-forward neural network configured to process an output of the connecting layer.

7. The system for abnormality prediction as recited in Claim 6, wherein the feed-forward neural network comprises:

a first sub-neural network configured to process an output of the connecting layer; and
a second sub-neural network arranged in parallel to the first sub-neural network and configured to process the output of the connecting layer,
wherein the inference calculator is configured to generate, based on an output of the first sub-neural network, the risk factor indicating a degree of the abnormal event, and to generate, based on an output of the second sub-neural network, the prediction time at which the abnormal event is likely to occur.

8. The system for abnormality prediction as recited in Claim 4 or 5, wherein:

at least one of the plurality of measurement instruments is configured to measure a state of an observed object; and
the connecting layer is configured to connect attribute information of the observed object inputted via the input layer with outputs of the recurrent neural networks.

9. The system for abnormality prediction as recited in Claim 3, wherein the intermediate layer structure comprises:

one or more convolutional neural networks configured to process the multidimensional array data inputted via the input layer; and
the one or more recurrent neural networks configured to process outputs of the one or more convolutional neural networks.

10. The system for abnormality prediction as recited in Claim 9, wherein the multidimensional array data comprises a third-order tensor.

11. The system for abnormality prediction as recited in Claim 9, wherein the intermediate layer structure further comprises:

a first sub-neural network configured to process an output of the recurrent neural network; and
a second sub-neural network arranged in parallel to the first sub-neural network and configured to process the output of the recurrent neural network,
wherein the inference calculator is configured to generate, based on an output of the first sub-neural network, the risk factor indicating a degree of the abnormal event, and to generate, based on an output of the second sub-neural network, the prediction time at which the abnormal event is likely to occur.

12. The system for abnormality prediction as recited in Claim 9, wherein the intermediate layer structure comprises:

a first sub-intermediate layer structure configured to process the multidimensional array data inputted via the input layer; and
a second sub-intermediate layer structure arranged in parallel to the first sub-intermediate layer structure and configured to process the multidimensional array data inputted via the input layer,
wherein the first sub-intermediate layer structure comprises:

a first convolutional neural network provided as at least one of the convolutional neural networks; and
a first recurrent neural network provided as one of the recurrent neural networks and configured to process an output of the first convolutional neural network,
wherein the second sub-intermediate layer structure comprises:

a second convolutional neural network provided as at least another one of the plurality of convolutional neural networks; and

a second recurrent neural network provided as another one of the recurrent neural networks and configured to process an output of the second convolutional neural network, and

wherein the inference calculator is configured to generate, based on an output of the first sub-intermediate layer structure, the risk factor indicating a degree of the abnormal event, and to generate, based on an output of the second sub-intermediate layer structure, a prediction time at which the abnormal event is likely to occur.

13. The system for abnormality prediction as recited in Claim 9, wherein:

at least one of the plurality of measurement instruments is configured to measure a state of an observed object; and

the intermediate layer structure further comprises one or more connecting layers configured to connect outputs of the one or more recurrent neural networks with attribute information of the observed object inputted via the input layer.

14. The system for abnormality prediction as recited in Claim 13, wherein the intermediate layer structure comprises:

a first sub-intermediate layer structure configured to process the multidimensional array data inputted via the input layer; and

a second sub-intermediate layer structure arranged in parallel to the first sub-intermediate layer structure and configured to process the multidimensional array data inputted via the input layer,

wherein the first sub-intermediate layer structure comprises:

a first convolutional neural network provided as at least one of the convolutional neural networks;

a first recurrent neural network provided as one of the recurrent neural networks and configured to process an output of the first convolutional neural network;

a first connecting layer provided as one of the connecting layers and configured to connect an output of the first recurrent neural network with the attribute information; and

a first feed-forward neural network configured to process an output of the first connecting layer, and wherein the second sub-intermediate layer structure comprises:

a second convolutional neural network provided as at least another one of the convolutional neural networks;

a second recurrent neural network provided as another one of the recurrent neural networks and configured to process an output of the second convolutional neural network;

a second connecting layer provided as another one of the connecting layers and configured to connect an output of the second recurrent neural network with the attribute information; and

a second feed-forward neural network configured to process an output of the second connecting layer.

15. The system for abnormality prediction as recited in any one of Claims 1-5 and 9-14, further comprising a feedback controller which performs control to change, according to the predictive information, an operation condition of a device which comprises at least one of the plurality of measurement instruments.

16. A method for predicting, from a plurality of data time series obtained by a plurality of measurement instruments, occurrences of at least one abnormal event, the method comprising the steps of :

reconstructing, from the plurality of data time series, multidimensional array data that comprises, as array elements, a plurality of measurement parameters and a plurality of relative time values that are assigned to the measurement parameters, respectively; and

calculating predictive information on the abnormal event, by performing calculation based on a neural network structure which comprises an input layer for receiving the multidimensional array data, an intermediate layer structure comprising one or more recurrent neural networks, and an output layer.

17. The method as recited in Claim 16, wherein the predictive information is information that represents a combination of a risk factor indicating a degree of the abnormal event, and a prediction time at which the abnormal event is likely to occur.

**18.** The method as recited in Claim 16, wherein:

the step for reconstructing the multidimensional array data comprises generating, from the plurality of data time series, a plurality of vector series as the multidimensional array data;
each of the plurality of vector series has a dimension for specifying each of the plurality of measurement parameters and a dimension for specifying each of the plurality of relative time values; and
the recurrent neural networks are configured to process in parallel the plurality of vector series inputted via the input layer, respectively.

**19.** The method as recited in Claim 16, wherein the step for reconstructing the multidimensional array data comprises:

generating a plurality of vector series from the plurality of data time series; and
generating the multidimensional array data to be inputted into the input layer, by synthesizing the plurality of vector series,
wherein each vector series of the plurality of vector series includes a plurality of vectors, each vector having, as vector components, at least one measurement parameter and a relative time value that is assigned to the at least one measurement parameter, and
wherein the recurrent neural networks are configured to process in parallel the plurality of vector series inputted via the input layer, respectively.

**20.** The method as recited in Claim 18 or 19, wherein the intermediate layer structure comprises:

a connecting layer configured to connect outputs of the recurrent neural networks; and
a feed-forward neural network configured to process an output of the connecting layer.

**21.** The method as recited in Claim 20, wherein the feed-forward neural network comprises:

a first sub-neural network configured to process an output of the connecting layer; and
a second sub-neural network arranged in parallel to the first sub-neural network and configured to process the output of the connecting layer,
wherein the step for calculating the predictive information comprises: generating, based on an output of the first sub-neural network, the risk factor indicating a degree of the abnormal event; and generating, based on an output of the second sub-neural network, a prediction time at which the abnormal event is likely to occur.

**22.** The method as recited in Claim 18 or 19, wherein:

at least one of the plurality of measurement instruments is configured to measure a state of an observed object; and
the connecting layer is configured to connect attribute information of the observed object inputted via the input layer with outputs of the recurrent neural networks.

**23.** The method as recited in Claim 16, wherein the intermediate layer structure comprises:

one or more convolutional neural networks configured to process the multidimensional array data inputted via the input layer; and
the one or more recurrent neural networks configured to process outputs of the one or more convolutional neural networks.

**24.** The method as recited in Claim 23, wherein the multidimensional array data comprises a third-order tensor.

**25.** The method as recited in Claim 23, wherein the intermediate layer structure further comprises:

a first sub-neural network configured to process an output of the recurrent neural network; and
a second sub-neural network arranged in parallel to the first sub-neural network and configured to process the output of the recurrent neural network,
wherein the step for calculating the predictive information comprises: generating, based on an output of the first sub-neural network, the risk factor indicating a degree of the abnormal event; and generating, based on an output of the second sub-neural network, the prediction time at which the abnormal event is likely to occur.

**26.** The method as recited in Claim 23, wherein the intermediate layer structure comprises:

a first sub-intermediate layer structure configured to process the multidimensional array data inputted via the input layer; and
a second sub-intermediate layer structure arranged in parallel to the a first sub-intermediate layer structure and configured to process the multidimensional array data inputted via the input layer,
wherein the first sub-intermediate layer structure comprises:

a first convolutional neural network provided as at least one of the convolutional neural networks; and
a second recurrent neural network provided as one of the recurrent neural networks and configured to process an output of the first convolutional neural network,
wherein the second sub-intermediate layer structure comprises:

a second convolutional neural network provided as at least another one of the plurality of convolutional neural networks; and
a second recurrent neural network provided as another one of the recurrent neural networks and configured to process an output of the second convolutional neural network, and
wherein the step for calculating the predictive information comprises: generating, based on an output of the first sub-intermediate layer structure, the risk factor indicating a degree of the abnormal event; and generating, based on an output of the second sub-intermediate layer structure, the prediction time at which the abnormal event is likely to occur.

**27.** The method as recited in Claim 23, wherein;

at least one of the plurality of measurement instruments is configured to measure a state of an observed object; and
the intermediate layer structure further comprises one or more connecting layers configured to connect outputs of the one or more recurrent neural networks with attribute information of the observed object inputted via the input layer.

**28.** The method as recited in Claim 27, wherein the intermediate layer structure comprises:

a first sub-intermediate layer structure configured to process the multidimensional array data inputted via the input layer; and
a second sub-intermediate layer structure arranged in parallel to the first sub-intermediate layer structure and configured to process the multidimensional array data inputted via the input layer,
wherein the first sub-intermediate layer structure comprises:

a first convolutional neural network provided as at least one of the convolutional neural networks;
a first recurrent neural network provided as one of the recurrent neural networks and configured to process an output of the first convolutional neural network;
a first connecting layer provided as one of the connecting layers and configured to connect an output of the first recurrent neural network with the attribute information; and
a first feed-forward neural network configured to process an output of the first connecting layer, and
wherein the second sub-intermediate layer structure comprises:

a second convolutional neural network provided as at least another one of the convolutional neural networks;
a second recurrent neural network provided as another one of the recurrent neural networks and configured to process an output of the second convolutional neural network;
a second connecting layer provided as another one of the connecting layers and configured to connect an output of the second recurrent neural network with the attribute information; and
a second feed-forward neural network configured to process an output of the second connecting layer.

**29.** The method as recited in any one of Claims 16 - 19 and 23 - 28, further comprising a step of performing control to change, according to the predictive information, an operation condition of a device which comprises at least one of the plurality of measurement instruments.

30. A computer program to be read from a nonvolatile memory and executed by one or more processors, wherein the computer program is configured to cause the one or more processors to perform the method recited in any one of Claims 16-19 and 23-28.

31. A computer program to be read from a nonvolatile memory and executed by one or more processors, wherein the computer program is configured to cause the one or more processors to perform the method recited in Claim 29.

Tgt

OBSERVED
OBJECT

1

$E_0$  $S_0$

MEASURE-
MENT
INSTRUMENT

DEVICE

~$D_0$

$E_1$  $S_1$

MEASURE-
MENT
INSTRUMENT

DEVICE

~$D_1$

....

$S_{K-1}$  $E_{K-1}$

MEASURE-
MENT
INSTRUMENT

DEVICE

~$D_{K-1}$

....

10

ABNORMALITY
PREDICTION
DEVICE

DATA INPUT UNIT

~23

....

20

DATA RECONSTRUCTOR

~25

MULTIDIMENSIONAL
ARRAY DATA

NEURAL NETWORK STRUCTURE
(NN STRUCTURE)

30

~27

INFERENCE CALCULATOR

PREDICTIVE INFORMATION

FIG. 1

$$D_0 = \{D_0(t)\} : D_0(t_0), D_0(t_1), D_0(t_2), D_0(t_3), D_0(t_4), D_0(t_5), D_0(t_6), \cdots$$

$$D_1 = \{D_1(t)\} : D_1(t_0), \quad D_1(t_2), \quad D_1(t_4), \quad D_1(t_6), \cdots$$

$$D_2 = \{D_2(t)\} : \quad D_2(t_1), \quad D_2(t_4), \quad \cdots$$

$$D_3 = \{D_3(t)\} : D_3(t_0), \quad D_3(t_4), \quad D_3(t_6), \cdots$$

## FIG. 2

$$D_0 = \left\{ D_0(t) = \begin{bmatrix} x_0(t) \\ y_0(t) \end{bmatrix} \right\} : \begin{bmatrix} x_0(t_0) \\ y_0(t_0) \end{bmatrix}, \begin{bmatrix} x_0(t_1) \\ y_0(t_1) \end{bmatrix}, \begin{bmatrix} x_0(t_2) \\ y_0(t_2) \end{bmatrix}, \begin{bmatrix} x_0(t_3) \\ y_0(t_3) \end{bmatrix}, \begin{bmatrix} x_0(t_4) \\ y_0(t_4) \end{bmatrix}, \cdots$$

$$D_1 = \{D_1(t) = x_1(t)\} : x_1(t_0), x_1(t_1), x_1(t_2), x_1(t_3), x_1(t_4), \cdots$$

$$D_2 = \{D_2(t) = x_2(t)\} : x_2(t_0), x_2(t_1), x_2(t_2), x_2(t_3), x_2(t_4), \cdots$$

## FIG. 3

MULTIDIMENSIONAL
ARRAY DATA →

30

40

INPUT
LAYER

50

INTERMEDIATE
LAYER
STRUCTURE

60

OUTPUT
LAYER → PREDICTIVE
INFORMATION

FIG. 4

300

INFORMATION
PROCESSING
APPARATUS

301

PROCESSOR

305

INPUT/OUTPUT
INTERFACE

306

RAM

NONVOLATILE
MEMORY

302

303

304

FIG. 5

START

RECEIVE A PLURALITY OF DATA TIME SERIES —S11

RECONSTRUCT,
FROM THE PLURALITY OF DATA TIME SERIES,
MULTIDIMENSIONAL ARRAY DATA THAT INCLUDES, AS
ARRAY ELEMENTS, A PLURALITY OF MEASUREMENT
PARAMETERS AND A PLURALITY OF RELATIVE TIME
VALUES THAT ARE ASSIGNED TO THE MEASUREMENT
PARAMETERS, RESPECTIVELY —S12

CALCULATE
PREDICTIVE INFORMATION ON ABNORMAL EVENT
BY PERFORMING CALCULATIONS BASED ON NEURAL
NETWORK STRUCTURE BY USING MULTIDIMENSIONAL
ARRAY DATA AS INPUT —S13

YES        IS        S20
PROCESS CONTINUED?

NO

END

FIG. 6

EP 4 517 561 A1

$$MD1 \begin{cases} G_0 = \left\{ v_0(\tau) = \begin{bmatrix} \tau \\ p_0(\tau) \end{bmatrix} \right\} : \begin{bmatrix} \tau_{0,0} \\ p_0(\tau_{0,0}) \end{bmatrix}, \begin{bmatrix} \tau_{0,1} \\ p_0(\tau_{0,1}) \end{bmatrix}, \begin{bmatrix} \tau_{0,2} \\ p_0(\tau_{0,2}) \end{bmatrix}, \cdots, \begin{bmatrix} \tau_{0,N-1} \\ p_0(\tau_{0,N-1}) \end{bmatrix} \\[3em] G_1 = \left\{ v_1(\tau) = \begin{bmatrix} \tau \\ p_1(\tau) \end{bmatrix} \right\} : \begin{bmatrix} \tau_{1,0} \\ p_1(\tau_{1,0}) \end{bmatrix}, \begin{bmatrix} \tau_{1,1} \\ p_1(\tau_{1,1}) \end{bmatrix}, \begin{bmatrix} \tau_{1,2} \\ p_1(\tau_{1,2}) \end{bmatrix}, \cdots, \begin{bmatrix} \tau_{1,N-1} \\ p_1(\tau_{1,N-1}) \end{bmatrix} \\[3em] \quad\vdots \qquad\qquad \vdots \qquad\qquad\qquad\qquad\qquad\qquad \vdots \\[2em] G_{K-1} = \left\{ v_{K-1}(\tau) = \begin{bmatrix} \tau \\ p_{K-1}(\tau) \end{bmatrix} \right\} : \begin{bmatrix} \tau_{K-1,0} \\ p_{K-1}(\tau_{K-1,0}) \end{bmatrix}, \begin{bmatrix} \tau_{K-1,1} \\ p_{K-1}(\tau_{K-1,1}) \end{bmatrix}, \begin{bmatrix} \tau_{K-1,2} \\ p_{K-1}(\tau_{K-1,2}) \end{bmatrix}, \cdots, \begin{bmatrix} \tau_{K-1,N-1} \\ p_{K-1}(\tau_{K-1,N-1}) \end{bmatrix} \end{cases}$$

FIG. 7

$$G_0 = \left\{ v_0(\tau) = \begin{bmatrix} \tau \\ p_0(\tau) \\ q_0(\tau) \end{bmatrix} \right\} : \begin{bmatrix} \tau_{0,0} \\ p_0(\tau_{0,0}) \\ q_0(\tau_{0,0}) \end{bmatrix}, \begin{bmatrix} \tau_{0,1} \\ p_0(\tau_{0,1}) \\ q_0(\tau_{0,1}) \end{bmatrix}, \begin{bmatrix} \tau_{0,2} \\ p_0(\tau_{0,2}) \\ q_0(\tau_{0,2}) \end{bmatrix}, \cdots, \begin{bmatrix} \tau_{0,N-1} \\ p_0(\tau_{0,N-1}) \\ q_0(\tau_{0,N-1}) \end{bmatrix}$$

$$G_1 = \left\{ v_1(\tau) = \begin{bmatrix} \tau \\ p_1(\tau) \end{bmatrix} \right\} : \begin{bmatrix} \tau_{1,0} \\ p_1(\tau_{1,0}) \end{bmatrix}, \begin{bmatrix} \tau_{1,1} \\ p_1(\tau_{1,1}) \end{bmatrix}, \begin{bmatrix} \tau_{1,2} \\ p_1(\tau_{1,2}) \end{bmatrix}, \cdots, \begin{bmatrix} \tau_{1,N-1} \\ p_1(\tau_{1,N-1}) \end{bmatrix}$$

$$G_{K-1} = \left\{ v_{K-1}(\tau) = \begin{bmatrix} \tau \\ p_{K-1}(\tau) \end{bmatrix} \right\} : \begin{bmatrix} \tau_{K-1,0} \\ p_{K-1}(\tau_{K-1,0}) \end{bmatrix}, \begin{bmatrix} \tau_{K-1,1} \\ p_{K-1}(\tau_{K-1,1}) \end{bmatrix}, \begin{bmatrix} \tau_{K-1,2} \\ p_{K-1}(\tau_{K-1,2}) \end{bmatrix}, \cdots, \begin{bmatrix} \tau_{K-1,N-1} \\ p_{K-1}(\tau_{K-1,N-1}) \end{bmatrix}$$

MD2

FIG. 8

EP 4 517 561 A1

FIG. 9

EP 4 517 561 A1

FIG. 10

FIG. 11

| MEASUREMENT PARAMETERS $p_k(\tau)$ | INPUT VECTOR SERIES $G_k$ | MEASUREMENT INTERVAL |
|---|---|---|
| BLOOD CIRCUIT PRESSURE $p_0(\tau)$ | $G_0 = \{v_0(\tau) = \begin{bmatrix} \tau \\ p_0(\tau) \end{bmatrix}\}$ | 20 SECONDS |
| DIALYSATE CIRCUIT PRESSURE $p_1(\tau)$ | $G_1 = \{v_1(\tau) = \begin{bmatrix} \tau \\ p_1(\tau) \end{bmatrix}\}$ | 20 SECONDS |
| ACHIEVED FLUID REMOVAL $p_2(\tau)$ | $G_2 = \{v_2(\tau) = \begin{bmatrix} \tau \\ p_2(\tau) \end{bmatrix}\}$ | 60 SECONDS |
| HEMATOCRIT VALUE $p_3(\tau)$ | $G_3 = \{v_3(\tau) = \begin{bmatrix} \tau \\ p_3(\tau) \end{bmatrix}\}$ | 20 SECONDS |
| PULSE RATE $p_4(\tau)$ | $G_4 = \{v_4(\tau) = \begin{bmatrix} \tau \\ p_4(\tau) \end{bmatrix}\}$ | 20 SECONDS |
| OXYGEN SATURATION DEGREE $p_5(\tau)$ | $G_5 = \{v_5(\tau) = \begin{bmatrix} \tau \\ p_5(\tau) \end{bmatrix}\}$ | 20 SECONDS |
| BLOOD PRESSURE VALUE $p_6(\tau)$ | $G_6 = \{v_6(\tau) = \begin{bmatrix} \tau \\ p_6(\tau) \end{bmatrix}\}$ | 30 MINUTES |

FIG. 12

FIG. 13

| PRESENCE/ABSENCE OF OCCURRENCES OF ABNORMAL EVENTS FOR 35 TEST DATA SETS | | ACTUAL RESULT | |
|---|---|---|---|
| | | PRESENCE | ABSENCE |
| PREDICTION RESULT | PRESENCE | 9 (= Naa) | 1 (= Nab) |
| | ABSENCE | 1 (= Nba) | 24 (= Nbb) |
| PERFORMANCE OF DETECTION OF ABNORMAL EVENTS | | SENSITIVITY (TRUE POSITIVE RATE): 90% SPECIFICITY: 96% POSITIVE PREDICTIVE VALUE: 90% NEGATIVE PREDICTIVE VALUE: 96% | |

FIG. 14

FIG. 15

FIG. 16

$$T1 = \begin{bmatrix} \tau_0 \\ p_0(\tau_0) \end{bmatrix} \begin{bmatrix} \tau_0 \\ p_1(\tau_0) \end{bmatrix} \begin{bmatrix} \tau_0 \\ p_2(\tau_0) \end{bmatrix} \cdots \begin{bmatrix} \tau_0 \\ p_{J-1}(\tau_0) \end{bmatrix}$$
$$\begin{bmatrix} \tau_1 \\ p_0(\tau_1) \end{bmatrix} \begin{bmatrix} \tau_1 \\ p_1(\tau_1) \end{bmatrix} \begin{bmatrix} \tau_1 \\ p_2(\tau_1) \end{bmatrix} \cdots \begin{bmatrix} \tau_1 \\ p_{J-1}(\tau_1) \end{bmatrix}$$
$$\begin{bmatrix} \tau_2 \\ p_0(\tau_2) \end{bmatrix} \begin{bmatrix} \tau_2 \\ p_1(\tau_2) \end{bmatrix} \begin{bmatrix} \tau_2 \\ p_2(\tau_2) \end{bmatrix} \cdots \begin{bmatrix} \tau_2 \\ p_{J-1}(\tau_2) \end{bmatrix}$$
$$\begin{bmatrix} \tau_{N-1} \\ p_0(\tau_{N-1}) \end{bmatrix} \begin{bmatrix} \tau_{N-1} \\ p_1(\tau_{N-1}) \end{bmatrix} \begin{bmatrix} \tau_{N-1} \\ p_2(\tau_{N-1}) \end{bmatrix} \cdots \begin{bmatrix} \tau_{N-1} \\ p_{J-1}(\tau_{N-1}) \end{bmatrix}$$

MD3

FIG. 17A

MD3

J

N

2

FIG. 17B

FIG. 18

EP 4 517 561 A1

FIG. 19

EP 4 517 561 A1

45

FIG. 20

FIG. 21

EP 4 517 561 A1

FIG. 22

FIG. 23

EP 4 517 561 A1

FIG. 24

EP 4 517 561 A1

FIG. 25

START

RECEIVE A PLURALITY OF DATA TIME SERIES — S11

RECONSTRUCT,
FROM THE PLURALITY OF DATA TIME SERIES,
MULTIDIMENSIONAL ARRAY DATA THAT INCLUDES, AS
ARRAY ELEMENTS, A PLURALITY OF MEASUREMENT
PARAMETERS AND A PLURALITY OF RELATIVE TIME
VALUES THAT ARE ASSIGNED TO THE MEASUREMENT
PARAMETERS, RESPECTIVELY — S12

CALCULATE
PREDICTIVE INFORMATION ON ABNORMAL EVENT
BY PERFORMING CALCULATIONS BASED ON NEURAL
NETWORK STRUCTURE BY USING MULTIDIMENSIONAL
ARRAY DATA AS INPUT — S13

S14
DOES
PREDICTIVE INFORMATION
MEET PREDETERMINED
CONDITION?

NO

YES

GENERATE,
ACCORDING TO PREDICTIVE INFORMATION,
CONTROL INFORMATION FOR CHANGING OPERATION
CONDITION OF AT LEAST ONE DEVICE — S15

SEND CONTROL INFORMATION — S16

S20
IS
PROCESS CONTINUED?

YES

NO

END

FIG. 26

FIG. 27

START

RECEIVE A PLURALITY OF VECTOR SERIES ~S11A

GENERATE MULTIDIMENSIONAL ARRAY DATA BY
SYNTHESIZING THE PLURALITY OF VECTOR SERIES ~S12A

CALCULATE
PREDICTIVE INFORMATION ON ABNORMAL EVENT
BY PERFORMING CALCULATIONS BASED ON NEURAL
NETWORK STRUCTURE BY USING MULTIDIMENSIONAL
ARRAY DATA AS INPUT ~S13

YES | IS PROCESS CONTINUED? S20

NO

END

FIG. 28

Tgt

OBSERVED
OBJECT

4

$U_0$  $S_0$  $U_1$  $S_1$  $U_{K-1}$  $S_{K-1}$

DEVICE | DEVICE | DEVICE

MEASURE-
MENT
INSTRUMENT

MEASURE-
MENT
INSTRUMENT

....

MEASURE-
MENT
INSTRUMENT

$D_0$  $D_1$  $D_{K-1}$

$V_0$  SERIES
GENERATOR

SERIES
GENERATOR  $V_1$

....

SERIES
GENERATOR  $V_{K-1}$

$G_0$  $G_1$  ....  $G_{K-1}$

....

21

DATA INPUT UNIT  24

....

SYNTHESIZER  26

MULTIDIMENSIONAL
ARRAY DATA

NEURAL NETWORK STRUCTURE
(NN STRUCTURE)  30

27

INFERENCE CALCULATOR

PREDICTIVE INFORMATION

FEEDBACK CONTROLLER  28

CT

ABNORMALITY
PREDICTION
DEVICE

13

FIG. 29

START

RECEIVE A PLURALITY OF VECTOR SERIES ~S11A

GENERATE MULTIDIMENSIONAL ARRAY DATA BY
SYNTHESIZING THE PLURALITY OF VECTOR SERIES ~S12A

CALCULATE
PREDICTIVE INFORMATION ON ABNORMAL EVENT
BY PERFORMING CALCULATIONS BASED ON NEURAL
NETWORK STRUCTURE BY USING MULTIDIMENSIONAL
ARRAY DATA AS INPUT ~S13

S14

NO — DOES
PREDICTIVE INFORMATION
MEET PREDETERMINED
CONDITION?

YES

GENERATE,
ACCORDING TO PREDICTIVE INFORMATION,
CONTROL INFORMATION FOR CHANGING OPERATION
CONDITION OF AT LEAST ONE DEVICE ~S15

SEND CONTROL INFORMATION ~S16

S20

YES — IS
PROCESS CONTINUED?

NO

END

FIG. 30

# INTERNATIONAL SEARCH REPORT

| International application No. |
| --- |
| **PCT/JP2023/015862** |

**A. CLASSIFICATION OF SUBJECT MATTER**

*G06F 18/10*(2023.01)i; *G06F 11/07*(2006.01)i; *G06N 3/044*(2023.01)i; *G06N 3/045*(2023.01)i

FI:  G06F18/10; G06N3/044; G06F11/07 151; G06F11/07 140A; G06N3/045

According to International Patent Classification (IPC) or to both national classification and IPC

**B. FIELDS SEARCHED**

Minimum documentation searched (classification system followed by classification symbols)

G06F18/10-18/15; G06F11/07; G06N3/02-3/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-201088 A (TATA CONSULTANCY SERVICES, LTD.) 01 December 2016 (2016-12-01)<br>entire text, all drawings | 1-31 |
| A | WO 2020/095848 A1 (KK TOSHIBA) 14 May 2020 (2020-05-14)<br>entire text, all drawings | 1-31 |
| A | 山室冴 ほか, 深層学習を用いた時系列データの要約と分類, 第10回データ工学と情報マネジメントに関するフォーラム(第16回日本データベース学会年次大会), 2018, pages 1-8, (YAMAMURO, Saeru et al. Summary and Classification of Time Series Data Using Deep Learning. The 10th Forum on Data Engineering and Information Management (The 16th annual meeting of The Database Society of Japan).)<br>entire text, all drawings | 1-31 |

☐ Further documents are listed in the continuation of Box C.      ☑ See patent family annex.

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **09 June 2023** | **20 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/015862**

| Patent document cited in search report | | | Publication date (day/month/year) | Patent family member(s) | | | Publication date (day/month/year) |
|---|---|---|---|---|---|---|---|
| JP | 2016-201088 | A | 01 December 2016 | US | 2016/0299938 | A1 | |
| | | | | entire text, all drawings | | | |
| | | | | EP | 3139313 | A2 | |
| | | | | CA | 2921054 | A1 | |
| WO | 2020/095848 | A1 | 14 May 2020 | US | 2021/0247754 | A1 | |
| | | | | entire text, all drawings | | | |
| | | | | JP | 2020-75385 | A | |
| | | | | EP | 3878575 | A1 | |
| | | | | CN | 112955266 | A | |
| | | | | KR | 10-2021-0065996 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021527906 A

- WO 2020046806 A

**Non-patent literature cited in the description**

- **NESMA M. REZK** ; **MADHURA PURNAPRAJNA** ; **TOMAS NORDSTROM** ; **ZAIN UL-ABDIN**. Recurrent Neural Networks: An Embedded Computing Perspective.. *IEEE Access*, 2020, vol. 8, 57967-57996